# EUROPÄISCHE PATENTSCHRIFT

(11) **EP 4 522 686 B1**
(45) Veröffentlichungstag und Bekanntmachung des Hinweises auf die Patenterteilung: **06.05.2026**
(21) Anmeldenummer: 22798171.9
(22) Anmeldetag: 07.11.2022
(51) Int. Cl.: C08K 5/5317, C08K 7/14

(54) **KRIECHSTROMFESTE POLYESTERZUSAMMENSETZUNGEN**
CREEP-RESISTANT POLYESTER COMPOSITIONS
COMPOSITIONS DE POLYESTER RÉSISTANT AUX COURANTS DE FUITE

(30) Priorität: 12.05.2022 EP 22172926
(43) Veröffentlichungstag der Anmeldung: 19.03.2025
(73) Patentinhaber: Envalior Deutschland GmbH, 40474 Düsseldorf (DE)
(72) Erfinder: ENDTNER, Jochen, 40474 Düsseldorf (DE); BIENMÜLLER, Matthias, 40474 Düsseldorf (DE)
(74) Vertreter: Envalior Association
(86) Internationale Anmeldenummer: PCT/EP2022/081004
(87) Internationale Veröffentlichungsnummer: WO 2023/217401

(56) Entgegenhaltungen:
- WO-A1-2021/076169
- DE-A1- 102017 215 776

## Beschreibung

Die vorliegende Erfindung betrifft die Verwendung eines Aluminiumsalzes der organischen Phosphorverbindung gemäß Formel (I) 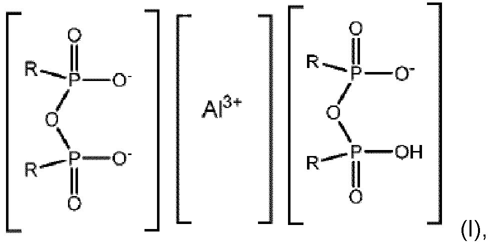 zum Erreichen eines CTI A von 600 nach IEC 60112-2010 in oder bei Polyester basierten Erzeugnissen, sowie flammgeschützte und kriechstromfeste Polyester basierte Zusammensetzungen und daraus herzustellende Erzeugnisse auf Basis wenigstens eines Polyesters enthaltend wenigstens ein Aluminiumsalz der organischen Phosphorverbindung der allgemeinen Formel (I) und wenigstens ein organisches Phosphinsäuresalz und/oder wenigstens ein Diphosphinsäuresalz, sowie ein Verfahren zu deren Herstellung.

### Hintergrund

Polyester, vorzugsweise Polyalkylenterephthalate oder Polycycloalkylenterephthalate und insbesondere Polybutylenterephthalat (PBT), sind aufgrund ihrer guten mechanischen Stabilität, ihrer geringen Wasseraufnahme und der guten Verarbeitbarkeit ein wichtiger Werkstoff zum Beispiel für den Einsatz in Kraftfahrzeugen, in Bauteilen für die Elektro- und Elektronikindustrie oder in Haushaltsgeräten. Hervorzuheben sind dabei insbesondere auch die hervorragenden elektrischen Isolationseigenschaften, die anders als z.B. bei Polyamiden auch bei erhöhten Anwendungstemperaturen und bei Feuchtigkeit weitgehend erhalten bleiben, was insbesondere für Anwendungen in schnellladefähigen Elektrofahrzeugen relevant ist. Bei Anwendungen der Polyester in der Nähe von stromführenden Teilen werden dabei häufig flammwidrig ausgestattete Materialien eingesetzt, um so der Gefahr einer Brandentstehung, ausgelöst durch überhitzte Drähte oder Kontakte, entgegenzuwirken. Hierfür werden vor allem gute Selbstverlöschungseigenschaft, insbesondere eine UL94 V-0 Klassifizierung gemäß Underwriters Laboratories Inc. Standard of Safety, "Test for Flammability of Plastic Materials for Parts in Devices and Appliances", S. 14 bis S. 18 Northbrook 1998**,** gefordert.

Neben dem heutzutage aus ökologischen Gründen immer mehr geforderten Einsatz halogenfreier Flammschutzmittel ist in technischen Anwendungen auch eine hohe Schlagzähigkeit bei gleichzeitig hoher Festigkeit und Steifigkeit, eine geringere Dichte sowie eine höhere Kriechstromfestigkeit nach IEC60112-2010 bei Polyester basierten Erzeugnissen anzustreben.

Der Wunsch nach maximaler Designfreiheit und damit höherer Komplexität der Bauteilgeometrie verlangt in Verbindung mit einer kostengetriebenen Notwendigkeit nach automatisierbaren und gut integrierbaren Serienfertigungsprozessen idealerweise auch nach Werkstoffen, die sich mittels Laserdurchstrahlschweißen [https://de.wikipedia.org/wiki/Laserdurchstrahlschwei%C3%9Fen] miteinander fügen lassen. Für einen lasertransparenten Fügepartner erfordert dies einen hohen Lasertransmissionsgrad bei der anzuwendenden Laserwellenlänge. Letzteres ist gerade bei Erzeugnissen auf Basis flammgeschützter Polyester eine große Herausforderung, da insbesondere Flammschutzmittel das Laserlicht streuen oder sogar absorbieren, wie dies beispielsweise bei einigen stickstoffhaltigen Flammschutzmittelsynergisten, insbesondere aber auch bei dem als Synergist in halogenhaltigen Flammschutzmitteln gebräuchlichen Antimontrioxid der Fall ist.

### Stand der Technik

WO 2021/076169 A1 offenbart in Tabelle 4 Polymerzusammensetzungen enthaltend Polybutylenterephthalat, Glas, Aluminiummethylphosphonat und Melam.

DE 10 2017 215776 A1 lehrt in Beispiel 4 eine Zusammensetzung enthaltend 50 Gew.-% Polybutylenterephthalat, 30 Gew.-% Glasfasern und 20 Gew.-% einer Flammschutzmittelkombination FM 4 aus Aluminiumsalz der Diethylphosphinsäure enthaltend 10 Mol-% Aluminium-Ethylbutylphosphinat und 5 Mol-% Aluminium-Ethylphosphonat hergestellt nach dem Verfahren gemäß US 7,420,007 B2**.**

Aus WO 2012/139990 A1 sind kriechstromfeste, flammhemmende, verstärkte, thermoplastische Formmassen auf Basis von Polyalkylenterephthalaten bekannt, die neben einem Flammschutzmittel aus stickstoffhaltigen oder phosphorhaltigen Verbindungen auch ein Polyolefin aus der Gruppe Polyethylen, Polypropylen und Polypropylen-Copolymeren enthalten. Diese zeichnen sich zwar durch erhöhte Kriechstromfestigkeiten aus, allerdings beinhaltet die Verwendung von Polyolefinen als Zusatzpolymer das Risiko, dass Abstriche bei den für Polyalkylenterephthalaten typischen Vorteilen, insbesondere einer hohen Oberflächenspannung und einer hohen Farbstabilität bei thermischer Belastung, in Kauf genommen werden müssen, zumal bei Verwendung von Polyolefinen - insbesondere Polyethylen - in Polyalkylenterephthalat Rezepturen auch ein erhöhtes Risiko von Rückständen im Spritzgusswerkzeug besteht.

Aus EP 3 067 388 A1 sind flammgeschützte Polyester basierte Formmassen enthaltend Aluminium-tris(dietyhlphosphinat) und Melamincyanurat bekannt, bei denen durch Zugabe von Bariumsulfat eine Verbesserung der Kriechstromfestigkeit erzielt wurde. Allerdings führt die Zugabe von unter Spritzgussbedingungen nicht aufschmelzbaren Feststoffen wie dem Bariumsulfat zu einer Verminderung der mechanischen Eigenschaften und auch einer Verringerung der Laserlichttransmission, was insbesondere bei laserdurchstrahlverschweißbaren Anwendungen unerwünscht ist. Des Weiteren konnte in EP 3 067 388 A1 trotz des Flammschutzmittels im Falle von PBT auch nur eine Brandklasse V-1 nach UL94 erzielt werden.

Ausgehend vom Stand der Technik bestand die Aufgabe der vorliegenden Erfindung darin, flammwidrig ausgerüstete, kriechstromfeste und glasfaserverstärkte Polyester basierte thermoplastische Formmassen bereit zu stellen, ohne die Verwendung von Polyolefinen und Bariumsulfat und vorzugsweise ohne die Verwendung stickstoffhaltiger, insbesondere melamin-basierter Synergisten, um gute mechanische Eigenschaften zu erzielen und dabei die Brandklasse V-0 nach UL94 bei maximal 0,8mm Wandstärken zu erzielen. Unter erhöhter Kriechstromfestigkeit wird erfindungsgemäß das Erreichen eines CTI A von 600 nach IEC 60112-2010 verstanden. Idealerweise soll diese verbesserte Kriechstromfestigkeit nicht dazu führen, dass die Lasertransmission beeinträchtigt wird und damit die Anwendung beim Laserdurchstrahlschweißen erschwert oder unmöglich wird. Gute mechanische Eigenschaften im Sinne der vorliegenden Erfindung zeichnen sich insbesondere durch hohe Werte in der nach **DIN EN ISO 180** zu bestimmenden IZOD-Schlagzähigkeit aus.

Es wurde nun überraschend gefunden, dass phosphorhaltige Aluminiumsalze der allgemeinen Formel (I) 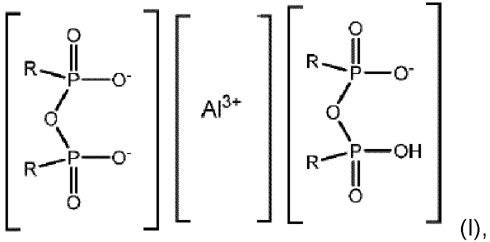 worin R für C₁-C₁₂-Alkyl steht, in Polyester basierten Erzeugnissen einen CTI A von 600 nach IEC 60112-2010 erreichen und in Kombination mit wenigstens einem organischen Metallphosphinat oder Diphosphinsäuresalz in verstärkten Polyester basierten Zusammensetzungen und daraus herzustellenden Erzeugnissen die erfindungsgemäße, komplexe Aufgabenstellung in Bezug auf Flammschutz, mechanische Eigenschaften und vor allem auch Lasertransparenz erfüllen, wenn der Massenanteil des Aluminiumsalzes der allgemeinen Formel (I) kleiner ist, als der Massenanteil an einzusetzendem organischen Metallphosphinat oder Diphosphinsäuresalz.

Überraschenderweise wurde zudem gefunden, dass mit den phosphorhaltigen Aluminiumsalzen der allgemeinen Formel (I) sogar abweichend von der Norm IEC 60112-2010 anstatt jeweils 50 Tropfen an 5 Probekörpern (250 Tropfen) noch anspruchsvoller mit jeweils 100 Tropfen an 3 Probekörpern (insgesamt 300 Tropfen) geprüft und dabei der Mittelwert der Tropfenzahl bis zum Versagen des Materials infolge eines Kriechstromes von > 0,5 A oder einer Entzündung mit nachfolgend andauernder Flamme des Polyester basierten Probekörpers deutlich höher lag, als in den Vergleichsbeispielen ohne die phosphorhaltigen Aluminiumsalze der allgemeinen Formel (I).

### IZOD-Schlagzähigkeit

Die im Rahmen der vorliegenden Erfindung zur Gewinnung mechanischer Kennwerte verwendete IZOD-Schlagzähigkeit nach **DIN EN ISO 180** kann sowohl für steife thermoplastische Spitzguss- und Extrusionsformmassen, duroplastische Werkstoffe und thermotrope flüssigkristalline Polymere, als auch für gefüllte und verstärkte Werkstoffe herangezogen werden. Dabei wird die beim Bruch aufgenommene Schlagarbeit *E_{C}* eines ungekerbten Prüfkörpers auf die Anfangsquerschnittsfläche des Prüfkörpers bezogen, entsprechend der folgenden Gleichung: ${a}_{iU} = \frac{{E}_{c}}{h ⋅ b}$ mit a*_{iU}* = Schlagzähigkeit, *h* = Dicke und *b* = Breite.

Die hierbei einzusetzenden Prüfkörper können nach der entsprechenden Formmassen-Norm oder durch Pressen und Spritzgießen hergestellt oder aus Vielzweckprüfkörpern entnommen werden (**DIN EN ISO 527 [2]**). Die Abmessungen des im Rahmen der vorliegenden Erfindung eingesetzten ungekerbten Prüfkörper nach **DIN EN ISO 3167,** Typ A sind: Länge l = (80 ± 2) mm; Breite b = (10,0 ± 0,2) mm; Dicke h = (4,0 ± 0,2) mm. **https://wiki.polymerservice-merseburg.de/index.php/Schlagbiegeversuch**

### Lasertransmission

Unter einer hohen Lasertransmission gilt erfindungsgemäß eine Lasertransmission von mindestens 8%, bevorzugt mindestens 9% gemessen an Plättchen mit einer Dicke von 1,5 mm mit dem Transmissionsmessgerät LPKF TMG3 der Firma LPKF Laser & Electronics AG, Garbsen, Deutschland bei einer Laserwellenlänge von 980 nm. Das Transmissionsmessgerät LPKF TMG3 ist ein zertifiziertes, rückführbar kalibriertes Messinstrument. Seine Messmittelfähigkeit wurde im Rahmen einer statistischen Messsystemanalyse (MSA) nachgewiesen. Das Gerät entspricht zudem den Vorgaben der **Automotive-Norm IATF 16949** und ist damit direkt zur normkonformen Qualitätssicherung qualifiziert. Die Messungen im Rahmen der vorliegenden Erfindung erfolgen auf Basis der **DVS-Richtlinie 2243 (01/2014) "Laserstrahlschweißen thermoplastischer Kunststoffe"** anhand von Prüfkörpern mit der Abmessung 125 mm • 13 mm • 1,5 mm im nahen Infrarot (NIR). Das Transmissionsmessgerät LPKF TMG3 der Firma LPKF Laser & Electronics AG wird vor den Messungen mit einem nach DIN EN ISO/IEC 17025 erzeugten Messnormal kalibriert. Die Messungen erfolgen im Rahmen der vorliegenden Erfindung bei einer Laserwellenlänge von 980 nm.

### Kriechstromfestigkeit

Gemäß **https://de.wikipedia.org/wiki/Kriechstromfestigkeit** kennzeichnet die Kriechstromfestigkeit die Isolationsfestigkeit der Oberfläche (Kriechstrecke) von Isolierstoffen, insbesondere unter Einwirkung von Feuchtigkeit und Verunreinigungen. Sie definiert den maximalen Kriechstrom, der sich unter genormten Prüfbedingungen (vorgegebene Spannung, Leitschichtmaterial) in einer definierten Prüfanordnung (Elektrodenabstand, Elektrodenform) einstellen darf. Die Kriechstromfestigkeit wird mit dem CTI-Wert (englisch *Comparative Tracking Index*) angegeben. Der CTI-Wert sagt aus, bis zu welcher Spannung, gemessen in Volt (V), das Untersuchungsmaterial kein Tracking zeigt, wenn 50 Tropfen genormter Elektrolytlösungen (A oder B, dementsprechend KA- oder KB-Wert) aufgetropft werden. Gemessen wird auf der Oberfläche, wobei alle 30 +/- 5 Sekunden ein Tropfen zwischen zwei Platin-Elektroden fällt. Ausfallkriterium ist ein Kriechstrom von > 0,5 A oder eine Entzündung des Bauteils. Einzelheiten zum Messverfahren des CTI-Werts sind in der IEC 60112 geregelt.

Erfindungsgemäße Polyester basierte Zusammensetzungen sollen schließlich in Bezug auf die in WO 2021/076169 A1 vorgegebene UL94 V-0 Klassifizierung bei maximal 0,8mm Dicke, zu ermitteln nach der Methode UL94V (Underwriters Laboratories Inc. Standard of Safety, "Test for Flammability of Plastic Materials for Parts in Devices and Appliances", S. 14 - 18 Northbrook 1998), ebenfalls eine V-0 Klassifizierung zeigen, oder zumindest keine wesentliche Verschlechterung gegenüber dem Stand der Technik zeigen.

"Alkyl" bezeichnet im Rahmen der vorliegenden Erfindung eine geradkettige oder verzweigte gesättigte Kohlenwasserstoffgruppe. In einigen Ausführungsformen wird eine Alkylgruppe mit 1 bis 6 Kohlenstoffatomen eingesetzt. Diese kann als eine "Niederalkylgruppe" bezeichnet werden. Bevorzugte Alkylgruppen sind Methyl (Me), Ethyl (Et), Propyl, insbesondere n-Propyl und iso-Propyl, Butyl, insbesondere n-Butyl, iso-Butyl, sec-Butyl, tert-Butyl, Pentyl-Gruppen, insbesondere n-Pentyl, iso-Pentyl, neo-Pentyl, Hexylgruppen und dergleichen. Entsprechendes gilt für den Begriff Polyalkylen.

Zur Klarstellung sei angemerkt, dass vom Rahmen der vorliegenden Erfindung alle aufgeführten allgemeinen oder in Vorzugsbereichen genannten Definitionen und Parameter in beliebigen Kombinationen umfasst sind. Dies betrifft insbesondere die angegebenen Massenanteile hinsichtlich der erfindungsgemäßen Zusammensetzungen, der erfindungsgemäß beschriebenen Verwendungen und der erfindungsgemäß beschriebenen Verfahren. Die im Rahmen dieser Anmeldung genannten Normen beziehen sich auf die zum Anmeldetag dieser Erfindung geltenden Fassung. Eine Arylgruppe (abgekürzt: Ar) ist ein organisch-chemischer Rest mit einem aromatischen Grundgerüst. Aryl ist somit die allgemeine Bezeichnung für eine einwertige Atomgruppe, die sich von aromatischen Kohlenwasserstoffen durch Entzug eines an den Ring gebundenen Wasserstoffatoms ableiten. Die meisten Arylreste leiten sich vom Benzol (C₆H₆) ab, die einfachste Arylgruppe ist die Phenylgruppe (Ph), (-C₆H₅). Arylreste können entweder als Fragment eines Moleküls oder als instabiles freies Radikal auftreten.

### Erfindungsgegenstand

Gegenstand der Erfindung ist die **Verwendung** von Aluminiumsalzen der allgemeinen Formel (I) 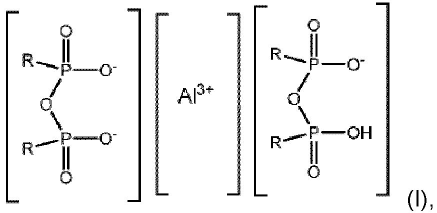 worin R für C₁-C₁₂-Alkyl steht, vorzugsweise für Methyl, Ethyl, Isopropyl oder iso-Butyl, tert.-Butyl oder n-Butyl, besonders bevorzugt für Ethyl oder Methyl, ganz besonders bevorzugt für Methyl, zum Erreichen eines CTI A von 600 nach IEC 60112-2010 in oder bei Polyester basierten Erzeugnissen, vorzugsweise bei oder in Polyalkylenterephthalat oder Polycycloalkylenterephthalat basierten Erzeugnissen, insbesondere bei oder in Polybutylenterephthalat (PBT), Polyethylenterephthalat (PET) oder Poly-1,4-cyclohexandimethanolterephthalat basierten Erzeugnissen. Zur Klarstellung sei angemerkt, dass bei Polybutylenterephthalat (PBT), Polyethylenterephthalat (PET) oder Poly-1,4-cyclohexandimethanolterephthalat basierten Erzeugnissen gleichbedeutend ist mit in Polybutylenterephthalat (PBT), Polyethylenterephthalat (PET) oder Poly-1,4-cyclohexandimethanolterephthalat basierten Erzeugnissen.

Die vorliegende Erfindung betrifft in erster Linie **Zusammensetzungen** enthaltend
A) auf 100 Massenanteile Polyalkylenterephthalat oder Polycycloalkylenterephthalat,
B) 1 bis 80 Massenanteile, bevorzugt 2 bis 60 Massenanteile, besonders bevorzugt 3 bis 30 Massenanteile, insbesondere bevorzugt 5 bis 20 Massenanteile wenigstens eines Aluminiumsalzes der allgemeinen Formel (I) 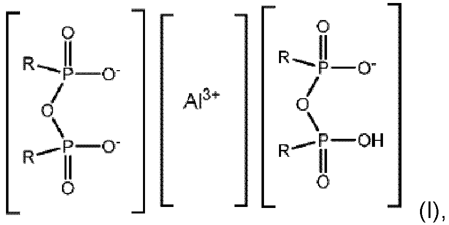 worin R für C₁-C₁₂-Alkyl steht, vorzugsweise für Methyl, Ethyl, Isopropyl oder iso-Butyl, tert.-Butyl oder n-Butyl, besonders bevorzugt für Ethyl oder Methyl, ganz besonders bevorzugt für Methyl,
   und
C) 5 bis 120 Massenanteile, bevorzugt 7 bis 80 Massenanteile, besonders bevorzugt 8 bis 60 Massenanteile, insbesondere bevorzugt 10 bis 50 Massenanteile wenigstens eines organischen Phosphinsäuresalzes der Formel (II) und/oder wenigstens eines Diphosphinsäuresalzes der Formel (III) und/oder deren Polymere, 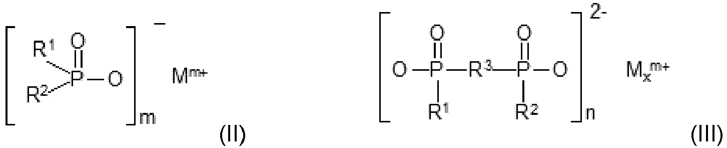 worin
   R¹, R² gleich oder verschieden sind und für ein lineares oder verzweigtes C₁-C₆-Alkyl, und/oder für C₆-C₁₄-Aryl stehen,
   R³ für lineares oder verzweigtes C₁-C₁₀-Alkylen, C₆-C₁₀-Arylen oder für C₁-C₆-Alkyl-C₆-C₁₀-arylen oder C₆-C₁₀-Aryl-C₁-C₆-alkylen steht,
   M für Aluminium, Zink oder Titan steht,
   m für eine ganze Zahl von 1 bis 4 steht,
   n für eine ganze Zahl von 1 bis 3 steht,
   x für 1 und 2 steht,
   wobei n, x und m in Formel (III) gleichzeitig nur solche ganzen Zahlen annehmen können, dass das Diphosphinsäuresalz der Formel (III) als Ganzes ungeladen ist, und
D) 3 bis 300 Massenanteile, bevorzugt 5 bis 200 Massenanteile, besonders bevorzugt zu 10 bis 120 Massenanteile, insbesondere bevorzugt 15 bis 90 Massenanteile wenigstens eines Glas basierten Füll- und/oder Verstärkungsstoffs
   mit der Maßgabe, dass Komponente B) in geringeren Massenanteilen als Komponente C) vorliegt.

Gegenstand der Erfindung sind auch Erzeugnisse basierend auf den erfindungsgemäßen Zusammensetzungen, insbesondere Erzeugnisse für die Elektromobilität, für Haushaltsgeräte sowie im Elektronik- und Elektrobereich.

Die Zubereitung erfindungsgemäßer Polyalkylenterephthalat oder Polycycloalkenterephthalat basierter Zusammensetzungen, insbesondere PBT, PET oder Poly-1,4-cyclohexandimethanolterephthalat basierter Zusammensetzungen, für die Anwendung in Erzeugnissen in der Elektromobilität, in Haushaltsgeräten sowie im Elektronik- und Elektrobereich, erfolgt durch Mischen der als Edukte einzusetzenden Komponenten A), B), C) und D) in wenigstens einem Mischwerkzeug in den oben angegebenen Massenanteilsverhältnissen. Durch das Mischen werden als Zwischenprodukte auf den erfindungsgemäßen Zusammensetzungen basierende Formmassen erhalten. Diese Formmassen können entweder ausschließlich aus den Komponenten A), B), C) und D) bestehen, oder aber zusätzlich noch wenigstens eine weitere Komponente E) enthalten. Im Falle, dass lasertransparente Zusammensetzungen bereitgestellt werden, sind weitere Komponenten E) so auszuwählen, dass auf laserabsorbierende Additive verzichtet wird.

Ferner ist Gegenstand der vorliegenden Erfindung ein **Verfahren** zur Herstellung von Erzeugnissen, vorzugsweise Erzeugnissen für die Elektromobilität, für Haushaltsgeräte sowie im Elektronik- und Elektrobereich, indem man die Komponente A) 100 Massenanteile Polyalkylenterephthalat oder Polycycloalkenterephthalat, insbesondere Polybutylenterephthalat, Polyethylenterephthalat oder Poly-1,4-cyclohexandimethanolterephthalat, mit
B) 1 bis 80 Massenanteilen, bevorzugt 2 bis 60 Massenanteilen, besonders bevorzugt 3 bis 30 Massenanteilen, insbesondere bevorzugt 5 bis 20 Massenanteilen wenigstens eines Aluminiumsalzes der allgemeinen Formel (I) 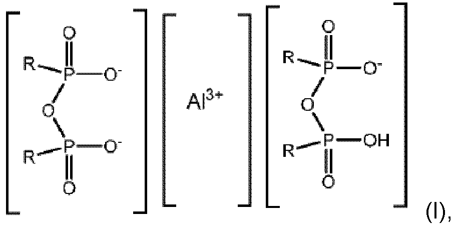 worin R für C₁-C₁₂-Alkyl steht, vorzugsweise für Methyl, Ethyl, Isopropyl oder iso-Butyl, tert.-Butyl oder n-Butyl, besonders bevorzugt für Ethyl oder Methyl, ganz besonders bevorzugt für Methyl, und
C) 5 bis 120 Massenanteilen, bevorzugt 7 bis 80 Massenanteilen, besonders bevorzugt 8 bis 60 Massenanteilen, insbesondere bevorzugt 10 bis 50 Massenanteilen wenigstens eines organischen Phosphinsäuresalzes der Formel (II) und/oder wenigstens eines Diphosphinsäuresalzes der Formel (III) und/oder deren Polymere, 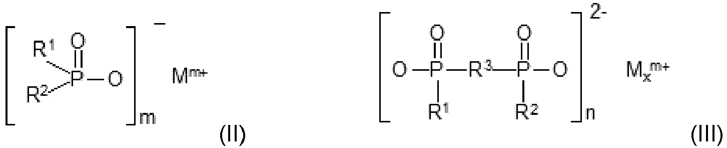 worin
   R¹, R² gleich oder verschieden sind und für ein lineares oder verzweigtes C₁-C₆-Alkyl, und/oder für C₆-C₁₄-Aryl stehen,
   R³ für lineares oder verzweigtes C₁-C₁₀-Alkylen, C₆-C₁₀-Arylen oder für C₁-C₆-Alkyl-C₆-C₁₀-arylen oder C₆-C₁₀-Aryl-C₁-C₆-alkylen steht,
      - M: für Aluminium, Zink oder Titan steht,
      - m: für eine ganze Zahl von 1 bis 4 steht,
      - n: für eine ganze Zahl von 1 bis 3 steht,
      - x: für 1 und 2 steht,
   wobei n, x und m in Formel (III) gleichzeitig nur solche ganzen Zahlen annehmen können, dass das Diphosphinsäuresalz der Formel (III) als Ganzes ungeladen ist, mit
D) 3 bis 300 Massenanteilen, bevorzugt 5 bis 200 Massenanteilen, besonders bevorzugt zu 10 bis 120 Massenanteilen, insbesondere bevorzugt 15 bis 90 Massenanteilen wenigstens eines Glas basierten Füll und/oder Verstärkungsstoffs
sowie gegebenenfalls mit weiteren Additiven in wenigstens einem Mischaggregat mischt oder vermengt und schließlich im Spritzguss verarbeitet und mit der Maßgabe, dass Komponente B) in geringeren Massenanteilen als Komponente C) eingesetzt wird.

Vorzugsweise werden die Komponenten zu einer Formmasse geknetet, compoundiert, extrudiert oder gewalzt. Bevorzugt erfolgt dieses Mischen bei einer Temperatur im Bereich von 230 bis 300°C, besonders bevorzugt durch Compoundieren auf einem gleichläufigen Zweiwellenextruder oder Buss-Kneter. Es kann vorteilhaft sein, einzelne Komponenten vorzumischen.

Das Verfahren des Spritzgusses zeichnet sich dadurch aus, dass der Rohstoff, bevorzugt in Granulatform, in einem beheizten zylindrischen Hohlraum aufgeschmolzen (plastifiziert) und als Spritzmasse unter Druck in einen temperierten Hohlraum gespritzt wird. Nach dem Abkühlen (Erstarren) der Masse wird das Spritzgussteil entformt.

### Man unterscheidet

1. Plastifizieren / Aufschmelzen
2. Einspritzphase (Füllvorgang)
3. Nachdruckphase (wegen thermischer Kontraktion bei der Kristallisation)
4. Entformen.

Eine Spritzgießmaschine besteht aus einer Schließeinheit, der Spritzeinheit, dem Antrieb und der Steuerung. Zur Schließeinheit gehören feste und bewegliche Aufspannplatten für das Werkzeug, eine Stirnplatte sowie Säulen und Antrieb der beweglichen Werkzeugaufspannplatte. (Kniehebelgelenk oder hydraulische Schließeinheit).

Eine Spritzeinheit umfasst den elektrisch beheizbaren Zylinder, den Antrieb der Schnecke (Motor, Getriebe) und die Hydraulik zum Verschieben der Schnecke und Spritzeinheit. Die Aufgabe der Spritzeinheit besteht darin, das Pulver bzw. das Granulat aufzuschmelzen, zu dosieren, einzuspritzen und nachzudrücken (wegen Kontraktion). Das Problem des Rückflusses der Schmelze innerhalb der Schnecke (Leckströmung) wird durch Rückstromsperren gelöst.

Im Spritzgießwerkzeug wird dann die einströmende Schmelze gelöst, gekühlt und somit das zu fertigende Erzeugnis gefertigt. Notwendig dazu sind immer zwei Werkzeughälften. Beim Spritzguss unterscheidet man folgende Funktionskomplexe:
- Angusssystem
- Formbildende Einsätze
- Entlüftung
- Maschinen- und Kraftaufnahme
- Entformungssystem und Bewegungsübertragung
- Temperierung

Die vorliegende Erfindung betrifft folglich auch Erzeugnisse erhältlich durch Spritzguss der erfindungsgemäßen Zusammensetzungen.

### Weitere bevorzugte Ausführungsformen der Erfindung

In einer weiteren bevorzugten Ausführungsform betrifft die Erfindung ferner Zusammensetzungen und auf diesen basierende Erzeugnisse enthaltend zusätzlich zu den Komponenten A) bis D) als Komponente E) noch wenigstens ein weiteres **von den Komponenten B), C) und D) verschiedenes Additiv,** bevorzugt zu 0,01 bis 100 Massenanteilen, besonders bevorzugt zu 0,05 bis 50 Massenanteilen, ganz besonders bevorzugt zu 0,1 bis 30 Massenanteilen, jeweils bezogen auf 100 Massenanteile der Komponente A) mit der Maßgabe, dass bei Bedarf eines Erhalts der Lasertransparenz auf laserabsorbierende Additive verzichtet wird.

### Komponente A)

Die erfindungsgemäß als Komponente A) einzusetzenden Polyalkylenterephthalate oder Polycycloalkylenterephthalate können nach verschiedenen Verfahren hergestellt werden, aus unterschiedlichen Bausteinen synthetisiert werden und im speziellen Anwendungsfall allein oder in Kombination mit Verarbeitungshilfsmitteln, Stabilisatoren, polymeren Legierungspartnern (z.B. Elastomeren) oder auch Verstärkungsmaterialien (wie z.B. mineralischen Füllstoffen oder Glasfasern) und gegebenenfalls weiteren Additiven, zu Werkstoffen mit speziell eingestellten Eigenschaftskombinationen ausgerüstet werden. Geeignet sind auch Blends mit Anteilen von anderen Polymeren, wobei gegebenenfalls ein oder mehrere Kompatibilisatoren eingesetzt werden können. Die Eigenschaften der Polymere können nach Bedarf durch Zusatz von Elastomeren verbessert werden.

Bevorzugte Polyalkylenterephthalate oder Polycycloalkylenterephthalate lassen sich aus Terephthalsäure (oder ihren reaktionsfähigen Derivaten) und aliphatischen oder cycloaliphatischen Diolen mit 2 bis 10 C-Atomen nach bekannten Methoden herstellen (Kunststoff-Handbuch, Bd. VIII, S. 695 - 743, Karl Hanser Verlag, München 1973).

Bevorzugte Polyalkylenterephthalate oder Polycycloalkylenterephthalate enthalten mindestens 80 Mol-%, vorzugsweise mindestens 90 Mol-%, bezogen auf die Dicarbonsäure, Terephthalsäurereste und mindestens 80 Mol-%, vorzugsweise mindestens 90 Mol-%, bezogen auf die Diolkomponente, 1,4-Cyclohexandimethanol- und/oder Ethylenglykol- und/oder Propandiol-1,3- (im Falle von Polypropylenterephthalat) und/oder Butandiol-1,4-reste.

Bevorzugte Polyalkylenterephthalate oder Polycycloalkylenterephthalate können neben Terephthalsäureresten bis zu 20 Mol-% Reste anderer aromatischer Dicarbonsäuren mit 8 bis 14 C-Atomen oder Reste aliphatischer Dicarbonsäuren mit 4 bis 12 C-Atomen enthalten, insbesondere Reste von Phthalsäure, Isophthalsäure, Naphthalin-2,6-dicarbonsäure, 4,4'-Diphenyldicarbonsäure, Bernsteinsäure, Adipinsäure, Sebacinsäure, Azelainsäure, Cyclohexandiessigsäure, Cyclohexandicarbonsäure.

Bevorzugte Polyalkylenterephthalate oder Polycycloalkylenterephthalate können neben 1,4-Cyclohexandimethanol bzw. Ethylenglykol bzw. 1,3-Propandiol bzw. 1,4-Butandiol-1,4 bis zu 20 Mol-% andere aliphatische Diole mit 3 bis 12 C-Atomen oder bis zu 20 Mol -% cycloaliphatische Diole mit 6 bis 21 C-Atomen enthalten, bevorzugt Reste von Propandiol-1,3, 2-Ethylpropandiol-1,3, Neopentylglykol, Pentan-diol-1,5, Hexandiol-1.6, 3-Methylpentandiol-2,4, 2-Methylpentandiol-2,4, 2,2,4-Trimethylpentandiol-1,3, 2,2,4-Trimethylpentandiol-1,5, 2-Ethylhexandiol-1,3, 2,2-Diethylpropandiol-1,3, Hexandiol-2,5, I,4-Di-(ß-hydroxyethoxy)-benzol, 2,2-Bis-(4-hydroxycyclohexyl)-propan, 2,4-Dihydroxy-1,1,3,3-tetramethyl-cyclobutan, 2,2-bis-(3-β-hydroxyethoxyphenyl)-propan und 2,2-bis-(4-hydroxypropoxyphenyl)-propan.

Besonders bevorzugt sind Polyalkylenterephthalate oder Polycycloalkylenterephthalate, die allein aus Terephthalsäure und deren reaktionsfähigen Derivaten, insbesondere deren Dialkylestern, und 1,4-Cyclohexandimethanol und/oder Ethylenglykol und/oder 1,3-Propandiol und/oder 1,4-Butandiol hergestellt werden, insbesondere bevorzugt Poly-1,4-cyclohexandimethanolterephthalat, Polyethylenterephthalat und Polybutylenterephthalat und Mischungen derselben.

Bevorzugte Polyalkylenterephthalate oder Polycycloalkylenterephthalate sind auch Copolyester, die aus mindestens zwei der obengenannten Säurekomponenten und/oder aus mindestens zwei der obengenannten Alkoholkomponenten hergestellt werden. Besonders bevorzugte Copolyester sind Poly-(ethylenglykol/butandiol-1,4)-terephthalate.

Die Polyalkylenterephthalate oder Polycycloalkylenterephthalate besitzen im allgemeinen eine intrinsische Viskosität im Bereich von 30 bis 150 cm³/g, vorzugsweise im Bereich von 40 bis 130 cm³/g, besonders bevorzugt im Bereich von 50 bis 100 cm³/g jeweils gemessen in Phenol/o-Dichlorbenzol (1:1 Gew.-Teile) bei 25°C. Die intrinsische Viskosität IV, auch als Staudinger-Index oder Grenzviskosität bezeichnet, ist nach der Mark-Houwink-Gleichung proportional zur mittleren Molekülmasse und ist die Extrapolation der Viskositätszahl VN für den Fall verschwindender Polymerkonzentrationen. Sie kann aus Messreihen oder durch die Verwendung geeigneter Näherungsverfahren (z.B. Billmeyer) abgeschätzt werden. Die VN [ml/g] erhält man aus der Messung der Lösungsviskosität im Kapillar-Viskosimeter, beispielsweise Ubbelohde-Viskosimeter. Die Lösungsviskosität ist ein Maß für das mittlere Molekulargewicht eines Kunststoffs. Die Bestimmung erfolgt an gelöstem Polymer, wobei unterschiedliche Lösungsmittel (Ameisensäure, m-Kresol, Tetrachlorethan, Phenol, 1,2-Dichlorbenzol, etc) und Konzentrationen zum Einsatz kommen. Durch die Viskositätszahl VN ist eine Kontrolle der Verarbeitungs- und Gebrauchseigenschaften von Kunststoffen möglich. Eine thermische Beanspruchung des Polymers, Alterungsvorgänge oder das Einwirken von Chemikalien, Bewitterung und Licht können durch vergleichende Messungen untersucht werden. Das Verfahren ist für gängige Kunststoffe genormt, im Rahmen der vorliegenden Erfindung gemäß **DIN ISO 1628-5** für Polyester. Siehe hierzu auch: **http://de.wikipedia.org/wikiNiskosimetrie** und **"http://de.wikipedia.org/wiki/Mark-Houwink-Gleichung".**

Die erfindungsgemäß als Komponente A) einzusetzenden Polyalkylenterephthalate oder Polycycloalkylenterephthalate können auch im Gemisch mit anderen Polyestern und/oder weiteren Polymeren eingesetzt werden.

Den als Komponente A) einzusetzenden Polyalkylenterephthalaten oder Polycycloalkylenterephthalaten können während der Compoundierung übliche Additive, insbesondere Entformungsmittel, in der Schmelze zugemischt werden, wobei der Fachmann unter Compoundierung (aus dem Englischen: *Compound =* "Mischung") einen Begriff aus der Kunststofftechnik versteht, der mit "Kunststoffaufbereitung" gleichzusetzen ist und den Veredelungsprozess von Kunststoffen durch Beimischung von Zuschlagstoffen (Füllstoffe, Additive usw.) zur gezielten Optimierung der Eigenschaftsprofile beschreibt. Die Compoundierung erfolgt vorzugsweise in Extrudern, besonders bevorzugt in gleichläufigen Doppelschneckenextrudern, gegenläufigen Doppelschneckenextrudern, Planetwalzenextrudern oder Co-Knetern und umfasst die Verfahrensoperationen Fördern, Aufschmelzen, Dispergieren, Mischen, Entgasen und Druckaufbau.

Vorzugsweise handelt es sich bei dem als Komponente A) einzusetzenden Polyester um Polyalkylenterephthalat oder Polycycloalkylenterephthalat, besonders bevorzugt um Polyethylenterephthalat (PET) [CAS Nr. 25038-59-9] oder um Polybutylenterephthalat [CAS Nr. 24968-12-5], insbesondere um Polybutylenterephthalat (PBT).

Alternativ handelt es sich bei dem als Komponente A) einzusetzenden Polyester um ein Polycycloalkylenterephthalat, insbesondere um Poly-1,4-cyclohexandimethanolterephthalat [CAS Nr.25037-99-4].

### Komponente B)

Als erfindungsgemäß einzusetzende Komponente B) wird wenigstens ein Aluminiumsalz der allgemeinen Formel (I) eingesetzt, 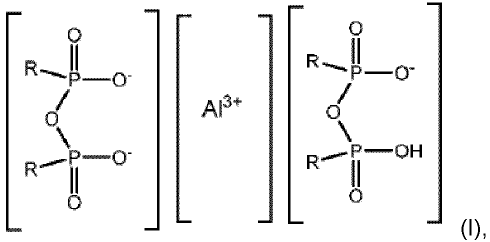 worin R für C₁-C₁₂-Alkyl steht, vorzugsweise für Methyl, Ethyl, Isopropyl oder iso-Butyl, tert.-Butyl oder n-Butyl, besonders bevorzugt für Ethyl oder Methyl, ganz besonders bevorzugt für Methyl.

Diese als Komponente B) einzusetzenden Aluminiumsalze organischer Phosphorverbindungen mit der allgemeinen Formel (I) können nach verschiedenen Verfahren hergestellt und aus unterschiedlichen Bausteinen synthetisiert werden. Im Rahmen der vorliegenden Erfindung wird zur Herstellung der erfindungsgemäß bevorzugt einzusetzenden Verbindung (la) mit R = Methyl folgendes Verfahren genutzt:

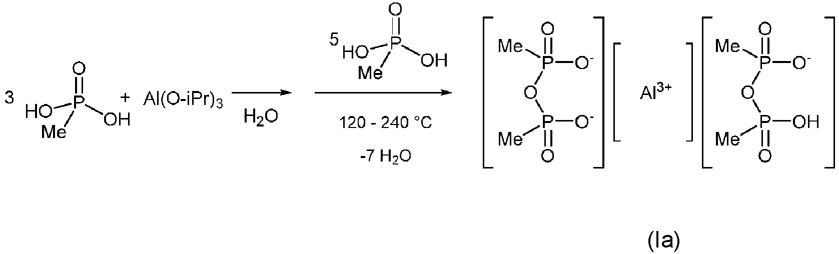

Ein Reaktionskessel wird mit 83 g Methylphosphonsäure beschickt und auf 120°C erhitzt. Ein Zwischenprodukt hergestellt aus 50 g Methylphosphonsäure und 35,4 g Aluminium-tris(isopropoxid) wird in Gegenwart von Wasser dem Reaktionskessel zugegeben. Die resultierende Lösung, welche als Zwischenprodukte Methylphosphonsäure und Aluminium-methylphosphonat im Molverhältnis von 5 : 1 enthält, wird unter mechanischem Rühren auf 240°C erhitzt. Das Rühren wird bei 240°C etwa 30 Minuten lang fortgesetzt, bis sich ein Feststoff bildet. Anschließend werden 500 ml Wasser zugegeben und diese Mischung für 16 h gerührt, währenddessen eine gleichmäßige Aufschlämmung entsteht. Das Produkt wird schließlich abfiltriert, mit 750 ml Wasser gewaschen und getrocknet. Das Resultat sind 64,3 g des als Komponente B) in bevorzugtester Ausführungsform einzusetzenden Produkts der Formel (la) als feine farblose Kristalle bei einer Ausbeute von 93 %. Die empirische Formel (la) repräsentiert sich wiederholende Monomereinheiten (i.e. Koordinationseinheiten) eines Koordinationspolymers das in Kristallform vorliegt.

Weitere Verfahren, insbesondere für R ≠ Methyl sind der WO 2020/132075 A1 zu entnehmen, deren Inhalt von der vorliegenden Erfindung vollumfänglich umfasst ist.

Besonders bevorzugt ist die Komponente B) gemäß der Formel (la) mit einem nach ICP-OES Elementaranalyse zu bestimmenden molaren Verhältnis von Phosphor zu Aluminium von 4 : 1, wobei nadelförmige Kristalle besonders bevorzugt sind. Siehe hierzu Beispiel 1 in WO 2021/076169 A1. Zu ICP-OES siehe: **https://www.itmc.rwthaachen.de/go/id/gden**

### Komponente C)

Als Komponente C) enthalten erfindungsgemäße Zusammensetzungen wenigstens ein Phosphinsäuresalz der Formel (II) 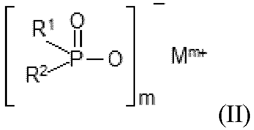 und/oder wenigstens ein Diphosphinsäuresalz der Formel (III) 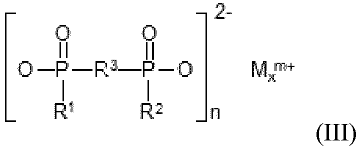 und/oder deren Polymere. Phosphinsäuresalze der Formel (II) und Diphosphinsäuresalze der Formel (III) werden im Rahmen der vorliegenden Erfindung auch als Phosphinate bezeichnet.

Bevorzugt steht M in den Formeln (II) oder (III) für Aluminium oder für Zink. Bevorzugt sind R¹, R² in den Formeln (II) und (III) gleich oder verschieden und bedeuten C₁-C₆-Alkyl, linear oder verzweigt und/oder Phenyl. Besonders bevorzugt sind R¹, R² gleich oder verschieden und bedeuten Methyl, Ethyl, n-Propyl, iso-Propyl, n-Butyl, tert.-Butyl, n-Pentyl und/oder Phenyl.

Bevorzugt bedeutet R³ in Formel (III) Methylen, Ethylen, n-Propylen, iso-Propylen, n-Butylen, tert.-Butylen, n-Pentylen, n-Octylen, n-Dodecylen, Phenylen, Naphthylen, Methylphenylen, Ethylphenylen, tert.-Butylphenylen, Methylnaphthylen, Ethylnaphthylen, tert.-Butylnaphthylen, Phenylmethylen, Phenylethylen, Phenylpropylen oder Phenylbutylen. Besonders bevorzugt bedeutet R³ Phenylen oder Naphthylen. Geeignete Phosphinate sind in der WO-A 97/39053 beschrieben, deren Inhalt in Bezug auf die Phosphinate von der vorliegenden Anmeldung mit umfasst wird. Besonders bevorzugte Phosphinate im Sinne der vorliegenden Erfindung sind Aluminium- und Zinksalze des Dimethylphosphinats, des Ethylmethylphosphinats, des Diethylphosphinats und des Methyl-n-propylphosphinats sowie deren Mischungen.

Bevorzugt steht m in Formel (II) für 2 und 3, besonders bevorzugt für 3.

Bevorzugt steht n in Formel (III) für 1 und 3, besonders bevorzugt für 3.

Bevorzugt steht x in Formel (III) für 1 und 2, besonders bevorzugt für 2.

Ganz besonders bevorzugt wird als Komponente C) Aluminium-tris(diethylphosphinat) [CAS Nr. 225789-38-8] eingesetzt, das z.B. von der Fa. Clariant International Ltd. Muttenz, Schweiz unter dem Handelsnamen Exolit^{®} OP1230 oder Exolit^{®} OP1240 angeboten wird.

Erfindungsgemäß wird Komponente B) in geringeren Massenanteilen als Komponente C) eingesetzt.

### Komponente D)

Erfindungsgemäße Polymerzusammensetzungen enthalten als Komponente D) wenigstens einen Glas basierten **Füll- und/oder Verstärkungsstoff.** Dabei können auch Mischungen aus zwei oder mehreren unterschiedlichen Glas basierten Füll- und/oder Verstärkungsstoffen eingesetzt werden.

Vorzugsweise wird als Komponente D) Glas gemäß **DIN1259-1** eingesetzt. Ganz besonders bevorzugt wird Glas als Voll- oder Hohlglaskugeln, Glasfasern, gemahlenes Glas oder Aluminium-Borsilikatglas mit einem Alkaligehalt 1% (E-Glas) [CAS Nr. 65997-17-3] eingesetzt.

Bezüglich der erfindungsgemäß bevorzugt einzusetzenden Glasfasern unterscheidet der Fachmann gemäß **"http://de.wikipedia.org/wiki/Faser-Kunststoff-Verbund"** geschnittene Fasern, auch als Kurzfasern bezeichnet, mit einer Länge im Bereich von 0,1 bis 1 mm, Langfasern mit einer Länge im Bereich von 1 bis 50 mm und Endlosfasern mit einer Länge L > 50 mm. Kurzfasern werden vorzugsweise in der Spritzgusstechnik eingesetzt und können direkt mit einem Extruder verarbeitet werden. Langfasern können ebenfalls noch in Extrudern verarbeitet werden. Endlosfasern werden als Rovings oder Gewebe in faserverstärkten Kunststoffen eingesetzt. Erzeugnisse mit Endlosfasern erzielen die höchsten Steifigkeits- und Festigkeitswerte. Des Weiteren werden gemahlene Glasfasern angeboten, deren Länge nach der Vermahlung typischerweise im Bereich von 70 bis 200 µm liegt.

Erfindungsgemäß besonders bevorzugt als Komponente D) einzusetzende Glasfasern sind geschnittene Langglasfasern mit einer mittleren Ausgangslänge im Bereich von 1 bis 50 mm, besonders bevorzugt im Bereich von 1 bis 10 mm, ganz besonders bevorzugt im Bereich von 2 bis 7 mm, wobei die Ausgangslänge sich auf die Länge vor jeglicher Verarbeitung, insbesondere in einem Compounder, bezieht.

Bevorzugte, als Komponente D) einzusetzende Glasfasern haben einen mittleren Faserdurchmesser im Bereich von 7 bis 18 µm, besonders bevorzugt im Bereich von 9 bis 15 µm. Als ein mögliches Verfahren zur Bestimmung der Faserdurchmesser kann dabei die Rasterelektronenmikroskopie (REM) herangezogen werden (**https://de.wikipedia.org/wiki/Rasterelektronenmikroskop**).

Die als Komponente D) vorzugsweise einzusetzenden Glasfasern werden in einer bevorzugten Ausführungsform mit einem geeigneten Schlichtesystem oder einem Haftvermittler bzw. Haftvermittlersystem ausgerüstet. Bevorzugt wird ein Schlichtesystem bzw. ein Haftvermittler auf Silanbasis eingesetzt. Besonders bevorzugte Haftvermittler auf Silanbasis für die Behandlung der als Komponente D) vorzugsweise einzusetzenden Glasfasern sind Silanverbindungen der allgemeine Formel (IV)

(X-(CH₂)_{q})ₖ-Si-(O-CrH₂ᵣ₊₁)₄₋ₖ (IV)

worin
- X: für NH₂-, Carboxyl-, HO- oder steht, 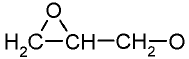
- q: in Formel (IV) für eine ganze Zahl von 2 bis 10, bevorzugt 3 bis 4 steht,
- r: in Formel (IV) für eine ganze Zahl von 1 bis 5, bevorzugt 1 bis 2 steht und
- k: in Formel (IV) für eine ganze Zahl von 1 bis 3, bevorzugt 1 steht.

Insbesondere bevorzugte Haftvermittler sind Silanverbindungen aus der Gruppe Aminopropyltrimethoxysilan, Aminobutyltrimethoxysilan, Aminopropyltriethoxysilan, Aminobutyltriethoxysilan sowie die entsprechenden Silane, welche als Substituent X in Formel (IV) eine Glycidyl- oder eine Carboxylgruppe enthalten, wobei Carboxylgruppen insbesondere ganz besonders bevorzugt sind.

Für die Ausrüstung der als Komponente D) vorzugsweise einzusetzenden Glasfasern wird der Haftvermittler, bevorzugt die Silanverbindungen gemäß Formel (IV), vorzugsweise in Mengen von 0,05 bis 2 Gew.-%, besonders bevorzugt in Mengen von 0,25 bis 1,5 Gew.-% und ganz besonders bevorzugt in Mengen von 0,5 bis 1 Gew.-%, jeweils bezogen auf 100 Gew.-% Komponente D), eingesetzt.

Die als Komponente D) vorzugsweise einzusetzenden Glasfasern können bedingt durch die Verarbeitung zur Zusammensetzung bzw. zum Erzeugnis in der Zusammensetzung bzw. im Erzeugnis kürzer sein, als die ursprünglich eingesetzten Glasfasern. So liegt der mittels hochauflösender Röntgencomputertomographie zu bestimmende arithmetische Mittelwert der Glasfaserlänge nach der Verarbeitung häufig nur noch im Bereich von 150 µm bis 300 µm.

Gemäß **"http://www.r-g.de/wiki/Glasfasern"** werden Glasfasern im Schmelzspinnverfahren (Düsenzieh-, Stabzieh- und Düsenblasverfahren) hergestellt. Beim Düsenziehverfahren fließt unter Ausnutzung der Schwerkraft die heiße Glasmasse durch hunderte Düsenbohrungen einer Platinspinnplatte. Die Elementarfäden können in unbegrenzter Länge mit einer Geschwindigkeit von 3 - 4 km/Minute gezogen werden.

Der Fachmann unterscheidet verschiedene Glasfasersorten, wovon hier beispielsweise einige gelistet sind:
- E-Glas, das meistverwendete Material mit optimalem Preis-Leistungsverhältnis (E-Glas von R&G) mit einer Zusammensetzung gemäß **https://www.r-g.de/wiki/Glasfasern** von 53-55 % SiO₂, 14-15 % Al₂O₃, 6-8% B₂O₃, 17-22% CaO, <5% MgO, <1% K₂O bzw. Na₂O und ca. 1% andere Oxide;
- H-Glas, Hohlglasfasern für reduziertes Gewicht (R&G Glashohlfasergewebe 160 g/m² und 216 g/m²);
- R, S-Glas, für erhöhte mechanische Anforderungen (S2-Glas von R&G);
- D-Glas, Borsilicatglas für erhöhte elektrische Anforderungen;
- C-Glas, mit erhöhter chemischer Widerstandsfähigkeit;
- Quarzglas, mit hoher Temperaturbeständigkeit.

Weitere Beispiele finden sich unter "**http://de.wikipedia.org/wiki/Glasfaser**". Für die Kunststoffverstärkung haben E-Glasfasern die größte Bedeutung erlangt. Das "E" in E-Glas steht für Elektro-Glas, da es ursprünglich vor allem in der Elektroindustrie eingesetzt wurde.

Für die Produktion von E-Glas werden Glasschmelzen aus reinem Quarz mit Zusätzen aus Kalkstein, Kaolin und Borsäure hergestellt. Sie enthalten neben Siliziumdioxid unterschiedliche Mengen verschiedener Metalloxide. Die Zusammensetzung bestimmt die Eigenschaften der Produkte. Erfindungsgemäß bevorzugt wird wenigstens eine Sorte Glasfasern aus der Gruppe E-Glas, H-Glas, R,S-Glas, D-Glas, C-Glas und Quarzglas eingesetzt, besonders bevorzugt Glasfasern aus E-Glas.

Glasfasern aus E-Glas sind der am weitesten verbreitete Verstärkungswerkstoff. Die Festigkeitseigenschaften entsprechen denen von Metallen (z. B. Alu-Legierungen), wobei das spezifische Gewicht von E-Glasfasern enthaltenden Laminaten niedriger ist, als das der Metalle. E-Glasfasern sind unbrennbar, hitzefest bis ca. 400°C und beständig gegen die meisten Chemikalien und Witterungseinflüsse.

Bevorzugt wird als Komponente D) aber auch nicht-faserförmiges und nicht-geschäumtes gemahlenes Glas mit einer mittels Laserdiffraktometrie gemäß **ISO 13320** zu bestimmenden Teilchengrößenverteilung mit einem d90 im Bereich von 5 bis 250 µm eingesetzt, bevorzugt im Bereich von 10 bis 150 µm, besonders bevorzugt im Bereich von 15 bis 80 µm, ganz besonders bevorzugt im Bereich von 16 bis 25 µm. Bezüglich der d90-Werte, ihrer Bestimmung und ihrer Bedeutung sei auf Chemie Ingenieur Technik (72) S. 273-276, 3/2000, Wiley-VCH Verlags GmbH, Weinheim, 2000 verwiesen, wonach der d90-Wert diejenige Partikelgröße ist, unterhalb derer 90 % der Partikelmenge liegen.

Erfindungsgemäß bevorzugt ist nicht-faserförmiges und nicht-geschäumtes gemahlenes Glas von partikelförmiger, nicht zylindrischer Gestalt das einen mittels Rasterelektronenmikroskopie zu bestimmendes Längen- zu Dickenverhältnis kleiner 5, bevorzugt kleiner als 3, besonders bevorzugt kleiner 2 hat. Der Wert Null ist selbstverständlich ausgeschlossen.

Das als Komponente D) in einer Ausführungsform einzusetzende nicht-geschäumte und nicht faserförmige gemahlene Glas ist zudem dadurch gekennzeichnet, dass es nicht die für faserförmiges Glas typische Glasgeometrie mit zylindrischem oder ovalen Querschnitt mit einem mittels Rasterelektronenmikroskopie zu bestimmenden Längen- zu Durchmesserverhältnis (L/D-Verhältnis) größer 5 aufweist.

Das erfindungsgemäß als Komponente D) in einer Ausführungsform einzusetzende nicht-geschäumte und nicht-faserförmige gemahlene Glas wird bevorzugt durch Mahlung von Glas mit einer Mühle, bevorzugt einer Kugelmühle und besonders bevorzugt mit anschließender Sichtung bzw. Siebung erhalten. Bevorzugte Ausgangsmaterialien für die Vermahlung des in einer Ausführungsform als Komponente D) einzusetzenden nichtfaserförmigem und nicht-geschäumten, gemahlenen Glas sind auch Glasabfälle, wie sie insbesondere bei der Herstellung von Glaserzeugnissen als unerwünschtes Nebenprodukt und / oder als nicht spezifikationsgerechtes Hauptprodukt (sogenannte Offspec-Ware) anfallen. Hierzu gehört insbesondere Abfall-, Recycling- und Bruchglas wie es insbesondere bei der Herstellung von Fenster- oder Flaschenglas, sowie bei der Herstellung von glashaltigen Füll- und Verstärkungsstoffen, insbesondere in Form von sogenannten Schmelzekuchen, anfallen kann. Das Glas kann gefärbt sein, wobei nichtgefärbtes Glas als Ausgangsmaterial zum Einsatz als Komponente D) bevorzugt ist.

### Komponente E)

Als Komponente E) wird wenigstens ein weiteres, von den Komponenten B), C) und D) verschiedenes Additiv eingesetzt mit der Maßgabe, dass bei Bedarf eines Erhalts der Lasertransparenz auf laserabsorbierende Additive verzichtet wird. Bevorzugte als Komponente E) einzusetzende Additive sind Antioxidantien, Thermostabilisatoren, UV-Stabilisatoren, Gammastrahlenstabilisatoren, Hydrolysestabilisatoren, Antistatika, Emulgatoren, Nukleierungsmittel, Weichmacher, Verarbeitungshilfsmittel, Schlagzähmodifikatoren, Gleit- und/oder Entformungsmittel, Fließhilfsmittel oder Elastomermodifikatoren, kettenverlängernd wirkende Additive, von Komponenten B) und C) verschiedene Flammschutzmittel, von Komponente D) verschiedene Füll- und Verstärkungsstoffe oder Farbmittel. Die Additive können alleine oder in Mischung bzw. in Form von Masterbatchen eingesetzt werden. Im Falle lasertransparenter Erzeugnisse sind die als Komponente E) einzusetzenden Additive so zu wählen, dass keine Laserabsorber wie insbesondere Ruß eingesetzt werden. Dem Fachmann sind laserabsorbierende Additive hinreichend bekannt.

Als Komponente E) bevorzugt einzusetzende **Thermostabilisatoren** sind ausgewählt aus der Gruppe der schwefelhaltigen Stabilisatoren, insbesondere Sulfide, Dialkylthiocarbamaten oder Thiodipropionsäuren, außerdem solche ausgewählt aus der Gruppe der Kupfersalze, hier insbesondere Kupfer(I)iodid, die bevorzugt in Kombination mit Kaliumiodid und/oder Natriumhypophosphit NaH₂PO₂ eingesetzt werden, ferner sterisch gehinderte Amine, insbesondere Tetrametyhlpiperidin-Derivate, aromatische sekundäre Amine, insbesondere Diphenylamine, Hydrochinone, substituierte Resorcine, Salicylate, Benzotriazole und Benzophenone, ferner sterisch gehinderte Phenole und aliphatisch oder aromatisch substituierte Phosphite sowie verschieden substituierte Vertreter dieser Gruppen.

Unter den sterisch gehinderten Phenolen werden bevorzugt solche mit mindestens einem 3-Tert.-butyl-4-hydroxy-5-methylphenyl- und/oder mindestens einem 3,5-Di-(tert.-butyl-4-hydroxyphenyl)-Baustein eingesetzt, wobei 1,6-Hexandiol-bis[3-(3,5-di-tert.-butyl-4-hydroxyphenyl)-propionat] [CAS Nr. 35074-77-2] (Irganox^{®} 259 der Fa. BASF SE, Ludwigshafen, Deutschland), Pentaerythril-tetrakis-[3-(3,5-di-tert.-butyl-4-hydroxyphenyl)-propionat] [CAS Nr. 6683-19-8] (Irganox^{®} 1010 der Fa. BASF SE) und 3,9-Bis[2-[3-(3-tert-butyl-4-hydroxy-5-methylphenyl)propionyloxy]-1,1-dimethylethyl]-2,4,8,10-tetraoxa-spiro[5.5]undecane [CAS Nr. 90498-90-1] (ADK Stab^{®} AO 80) besonders bevorzugt sind. ADK Stab^{®} AO 80 ist ein Handelsprodukt der Fa. Adeka-Palmerole SAS, Mulhouse, Frankreich.

Unter den aliphatisch oder aromatisch substituierten Phosphiten wird bevorzugt Bis(2,4-dicumylphenyl)-pentaerythritol-diphosphit [CAS Nr. 154862-43-8], das z. B. von der Fa. Dover Chemical Corp., Dover, USA unter dem Handelsnamen Doverphos^{®} S9228 angeboten wird und Tetrakis(2,4-di-tert-butylphenyl)-1,1-biphenyl-4,4'-diylbisphosphonit [CAS Nr. 38613-77-3] eingesetzt, das z. B. als Hostanox^{®} P-EPQ von der Fa. Clariant International Ltd., Muttenz, Schweiz bezogen werden kann.

Die als Komponente E) einzusetzenden Thermostabilisatoren werden vorzugsweise zu 0,01 bis 2 Massenanteilen, besonders bevorzugt zu 0,05 bis 1 Massenanteilen, jeweils bezogen auf 100 Massenanteile der Komponente A) eingesetzt.

Als Komponente E) einzusetzende **UV-Stabilisatoren** werden vorzugsweise substituierte Resorcine, Salicylate, Benzotriazole und Benzophenone, HALS-Derivate ("Hindered Amine Light Stabilizers") enthaltend mindestens eine 2,2,6,6-Tetramethyl-4-piperidyl-Einheit oder Benzophenone eingesetzt.

Die als Komponente E) einzusetzenden UV-Stabilisatoren werden vorzugsweise zu 0,01 bis 2 Massenanteilen, besonders bevorzugt zu 0,1 bis 1 Massenanteilen, jeweils bezogen auf 100 Massenanteile der Komponente A) eingesetzt.

Als Komponente E) einzusetzende **Farbmittel** werden bevorzugt anorganische Pigmente, insbesondere Ultramarinblau, Bismutvanadat, Eisenoxid, Titandioxid, Zinksulfid, Zinn-Titan-Zinkoxide [CAS Nr. 923954-49-8], weiterhin organische Farbmittel, bevorzugt Phthalocyanine, Chinacridone, Benzimidazole, insbesondere Ni-2-hydroxy-napthyl-benzimidazol [CAS Nr. 42844-93-9] und/oder Pyrimidin-azo-benzimidazol [CAS-Nr. 72102-84-2] und/oder Pigment Yellow 192 [CAS Nr. 56279-27-7], außerdem Perylene, Anthrachinone, insbesondere C.I. Solvent Yellow 163 [CAS Nr. 13676-91-0] eingesetzt, wobei diese Aufzählung nicht abschließend ist und wobei die Auswahl der Farbmittel unter besonderer Berücksichtigung der Anforderungen an das Lasertransmissions- bzw. das Laserabsorptionsverhalten zu erfolgen hat.

In einer besonderen Ausführungsform, vorzugsweise im Falle eines laserabsorbierenden Bauteils, können als Farbmittel auch Ruß und/oder Nigrosin eingesetzt werden.

Als Komponente E) einzusetzende **Nukleierungsmittel** werden bevorzugt Natrium- oder Calciumphenylphosphinat, Aluminiumoxid oder Siliziumdioxid sowie ganz besonders bevorzugt Talkum eingesetzt, wobei diese Aufzählung nicht abschließend ist.

Als Komponente E) einzusetzende **Fließhilfsmittel** werden bevorzugt Copolymerisate aus mindestens einem α-Olefin mit mindestens einem Methacrylsäurester oder Acrylsäureester eines aliphatischen Alkohols eingesetzt. Besonders bevorzugt sind dabei Copolymerisate, bei denen das α-Olefin Ethen- und/oder Propen-Einheiten enthält und der Methacrylsäurester oder Acrylsäureester als Alkoholkomponente lineare oder verzweigte Alkylgruppen mit 6 bis 20C-Atomen enthält. Ganz besonders bevorzugt ist Acrylsäure-(2-ethyl)-hexylester. Als Fließhilfsmittel geeignete Copolymerisate zeichnen sich neben der Zusammensetzung auch durch das niedrige Molekulargewicht aus. Dementsprechend sind für erfindungsgemäße Zusammensetzungen vor allem Copolymerisate geeignet, die einen MFI-Wert gemessen bei 190°C und einer Belastung von 2,16 kg von mindestens 100 g / 10 min, bevorzugt von mindestens 150 g / 10 min, besonders bevorzugt von mindestens 300 g / 10 min aufweisen. Der MFI, Melt-Flow-Index, dient zur Charakterisierung des Flusses einer Schmelze eines Thermoplasten und unterliegt den Normen **ISO 1133** oder **ASTM D 1238**. Insbesondere bevorzugt wird als Fließhilfsmittel ein Copolymerisat aus Ethen und Acrylsäure-(2-ethyl)-hexylester mit MFI 550 eingesetzt, bekannt als Lotryl^{®} 37EH550.

Als Komponente E) einzusetzende **kettenverlängernde Additive** und als **Hydrolysestabilisatoren** werden bevorzugt di- oder mehrfunktionelle verzweigend oder kettenverlängernd wirkende Additive, enthaltend mindestens zwei verzweigend oder kettenverlängernd wirkende funktionelle Gruppen pro Molekül, eingesetzt. Als verzweigende bzw. kettenverlängende Additive werden niedermolekulare, oligomere oder polymere Verbindungen bevorzugt, die über mindestens zwei kettenverlängernd wirkende funktionelle Gruppen pro Molekül verfügen, welche mit Alkoholgruppen und/oder Amidgruppen und/oder Carbonsäuregruppen reagieren können. Kettenverlängernd wirkende funktionelle Gruppen sind bevorzugt Isocyanate, Carbodiimide, Alkohole, Epoxide, Maleinsäureanhydrid, Oxazoline, Oxazine, Oxazolone, wobei Epoxide und Carbodiimide besonders bevorzugt sind.

Insbesondere bevorzugte di- oder mehrfunktionelle verzweigend oder kettenverlängernd wirkende Additive sind Diepoxide auf Basis Diglycidylether (Bisphenol und Epichlorhydrin), auf Basis von Aminepoxidharz (Anilin und Epichlorhydrin), auf Basis von Diglycidylester (cycloaliphatische Dicarbonsäuren und Epichlorhydrin) einzeln oder in Mischungen sowie 2,2-Bis[p-hydroxy-phenyl]-propan-diglycidylether, Bis-[p-(N-methyl-N-2,3-epoxy-propylamino)-phenyl]-methan sowie epoxidierte Fettsäureester des Glycerins, enthaltend mindestens zwei Epoxidgruppen pro Molekül.

Besonders bevorzugte di- oder mehrfunktionelle verzweigend oder kettenverlängernd wirkende Additive sind Glycidylether, ganz besonders bevorzugt Bisphenol A-Diglycidylether [CAS Nr. 98460-24-3] oder epoxidierte Fettsäureester des Glycerins, sowie auch ganz besonders bevorzugt epoxidiertes Sojaöl [CAS Nr. 8013-07-8] und/oder epoxidiertes Leinöl [CAS Nr. 8016-11-3] sowie insbesondere ganz besonders bevorzugt Carbodiimide, wobei polymere Carbodiimide wie beispielsweise Poly-2,4,6-Triisopropyl 1,3-dicarbodiimide sowie einen Pentaerytrit-Baustein enthaltende Carbodiimide, insbesondere 14,14',15,15'-Tetradehydro-7,7'-spirobi[dibenzo[b,g][1,9,4,6]dioxadiaza-cyclododecine], [CAS-Nr. 1231148-36-9] innerhalb der Klasse der Carbodiimide wiederum besonders bevorzugt sind.

Bevorzugt als Komponente E) einzusetzende **Weichmacher** sind Phthalsäuredioctylester, Phthalsäuredibenzylester, Phthalsäurebutylbenzylester, Kohlenwasserstofföle oder N-(n-Butyl)benzolsulfonamid.

Bevorzugt als Komponente E) einzusetzende **Elastomermodifikatoren** umfassen u.a. ein oder mehrere Pfropfpolymerisate von

| | |
|---|---|
| E.1 | 5 bis 95 Gew.-%, vorzugsweise 30 bis 90 Gew.-%, wenigstens eines Vinylmonomeren und |
| E.2 | 95 bis 5 Gew.-%, vorzugsweise 70 bis 10 Gew.-% einer oder mehrerer Pfropfgrundlagen mit Glasübergangstemperaturen < 10°C, vorzugsweise < 0°C, besonders bevorzugt < -20°C, wobei die Gewichtsprozente sich auf 100 Gew.-% Elastomermodifikator beziehen. |

Die Pfropfgrundlage E.2 hat im allgemeinen eine mittels Laserdiffraktometrie gemäß **ISO 13320** zu bestimmende mittlere Teilchengröße d50-Wert von 0,05 bis 10 µm, vorzugsweise 0,1 bis 5 µm, besonders bevorzugt 0,2 bis 1 µm.

Monomere zu E.1 sind vorzugsweise Gemische aus

| | |
|---|---|
| E.1.1 | 50 bis 99 Gew.-% Vinylaromaten und/oder kernsubstituierten Vinylaromaten, insbesondere Styrol, α-Methylstyrol, p-Methylstyrol, p-Chlorstyrol, und/oder Methacrylsäure-(C₁-C₈)-Alkylester, insbesondere Methylmethacrylat oder Ethylmethacrylat, und |
| E.1.2 | 1 bis 50 Gew.-% Vinylcyanide, vorzugsweise ungesättigte Nitrile, insbesondere Acrylnitril und Methacrylnitril, und/oder (Meth)Acrylsäure-(C₁-C₈)-alkylester, insbesondere Methylmethacrylat, Glycidylmethacrylat, n-Butylacrylat, t-Butylacrylat, und/oder Derivate, insbesondere Anhydride und Imide ungesättigter Carbonsäuren, insbesondere Maleinsäureanhydrid oder N-Phenyl-Maleinimid, wobei die Gewichtsprozente von E.1.1 und E.1.2 sich auf 100 Gew.-% Elastomermodifikator beziehen. |

Bevorzugte Monomere E.1.1 sind auszuwählen aus mindestens einem der Monomere Styrol, α-Methylstyrol und Methylmethacrylat, bevorzugte Monomere E.1.2 sind ausgewählt aus mindestens einem der Monomere Acrylnitril, Maleinsäureanhydrid, Glycidylmethacrylat und Methylmethacrylat. Besonders bevorzugte Monomere sind E.1.1 Styrol und E.1.2 Acrylnitril.

Für die in den Elastomermodifikatoren einzusetzenden Pfropfpolymerisate geeignete Pfropfgrundlagen E.2 sind beispielsweise Dienkautschuke, EPDM-Kautschuke, also solche auf Basis Ethylen/Propylen und gegebenenfalls Dien, ferner Acrylat-, Polyurethan-, Silikon-, Chloropren und Ethylen/Vinylacetat-Kautschuke. EPDM steht für Ethylen-Propylen-Dien-Kautschuk.

Bevorzugte Pfropfgrundlagen E.2 sind Dienkautschuke, insbesondere auf Basis Butadien, Isopren etc. oder Gemische von Dienkautschuken oder Copolymerisate von Dienkautschuken oder deren Gemischen mit weiteren copolymerisierbaren Monomeren, insbesondere gemäß E.1.1 und E.1.2, mit der Maßgabe, dass die Glasübergangstemperatur der Komponente E.2 bei <10°C, vorzugsweise bei <0°C, besonders bevorzugt bei <-10°C liegt.

Besonders bevorzugte Propfgrundlagen E.2 sind ABS-Polymerisate (Emulsions-, Masse- und Suspensions-ABS) wobei ABS für Acrylnitril-Butadien-Styrol steht, wie sie z. B. in der DE-A 2 035 390 oder in der DE-A 2 248 242 bzw. in Ullmann, Enzyklopädie der Technischen Chemie, Bd. 19 (1980), S. 277 - 295 beschrieben sind. Der Gelanteil der Pfropfgrundlage E.2 beträgt bevorzugt mindestens 30 Gew.-%, besonders bevorzugt mindestens 40 Gew.-% (in Toluol gemessen).

Die als Komponente E) einzusetzenden Elastomermodifikatoren bzw. Pfropfpolymerisate werden durch radikalische Polymerisation, bevorzugt durch Emulsions-, Suspensions-, Lösungs- oder Massepolymerisation, insbesondere durch Emulsions- oder Massepolymerisation hergestellt.

Besonders geeignete Pfropfkautschuke sind auch ABS-Polymerisate, die durch Redox-Initiierung mit einem Initiatorsystem aus organischem Hydroperoxid und Ascorbinsäure gemäß US-A 4 937 285 hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten auch solche Produkte verstanden, die durch (Co)Polymerisation der Pfropfmonomere in Gegenwart der Pfropfgrundlage gewonnen werden und bei der Aufarbeitung mit anfallen.

Ebenfalls geeignete Acrylatkautschuke basieren auf Pfropfgrundlagen E.2 die vorzugsweise Polymerisate aus Acrylsäurealkylestern, gegebenenfalls mit bis zu 40 Gew.-%, bezogen auf E.2 anderen polymerisierbaren, ethylenisch ungesättigten Monomeren. Zu den bevorzugten polymerisierbaren Acrylsäureestern gehören C₁-C₈-Alkylester, vorzugsweise Methyl-, Ethyl-, Butyl-, n-Octyl- und 2-Ethylhexylester; Halogenalkylester, vorzugsweise Halogen-C₁-C₈-alkyl-ester, wie Chlorethylacrylat, Glycidylester sowie Mischungen dieser Monomeren. Dabei sind Propfpolymerisate mit Butylacrylat als Kern und Methylmethacrylaten als Schale, insbesondere. Paraloid^{®} EXL2300, Fa. Dow Corning Corporation, Midland, Michigan, USA, besonders bevorzugt.

Zur Vernetzung können alternativ zu den ethylenisch ungesättigten Monomeren Monomere mit mehr als einer polymerisierbaren Doppelbindung copolymerisiert werden. Bevorzugte vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, bevorzugt Ethylenglykoldimethacrylat, Allylmethacrylat; mehrfach ungesättigte heterocyclische Verbindungen, bevorzugt Trivinyl- und Triallylcyanurat; polyfunktionelle Vinylverbindungen, bevorzugt Di- und Trivinylbenzole; aber auch Triallylphosphat und Diallylphthalat.

Besonders bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Ganz besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5 Gew.-%, insbesondere 0,05 bis 2 Gew.-%, bezogen auf die Pfropfgrundlage E.2.

Bei cyclischen vernetzenden Monomeren mit mindestens 3 ethylenisch ungesättigten Gruppen ist es vorteilhaft, die Menge auf unter 1 Gew.-% der Pfropfgrundlage E.2 zu beschränken.

Bevorzugte "andere" polymerisierbare, ethylenisch ungesättigte Monomere, die neben den Acrylsäureestern gegebenenfalls zur Herstellung der Pfropfgrundlage E.2 dienen können, sind Acrylnitril, Styrol, α-Methylstyrol, Acrylamide, Vinyl-C₁-C₆-alkylether, Methylmethacrylat, Glycidylmethacrylat, Butadien. Bevorzugte Acrylatkautschuke als Pfropfgrundlage E.2 sind Emulsionspolymerisate, die einen Gelgehalt von mindestens 60 Gew.-% aufweisen.

Weitere bevorzugt geeignete Pfropfgrundlagen gemäß E.2 sind Silikonkautschuke mit pfropfaktiven Stellen, wie sie in den DE-A 3 704 657**,** DE-A 3 704 655**,** DE-A 3 631 540 und DE-A 3 631 539 beschrieben werden.

Bevorzugte Propfpolymerisate mit einem Silikonanteil sind solche, die Methylmethacrylat oder Styrol-Acrylnitril als Schale und ein Silikon/Acrylat-Propf als Kern aufweisen. Bevorzugt als Schale einzusetzendes Styrol-Acrylnitril ist Metablen^{®} SRK200. Bevorzugt als Schale einzusetzendes Methylmethacrylat ist Metablen^{®} S2001 oder Metablen^{®} S2030 oder Metablen^{®} SX-005. Besonders bevorzugt wird Metablen^{®} S2001 eingesetzt. Die Produkte mit dem Handelsnamen Metablen^{®} sind erhältlich bei Mitsubishi Rayon Co., Ltd., Tokio, Japan.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, bevorzugt Ethylenglykoldimethacrylat, Allylmethacrylat; mehrfach ungesättigte heterocyclische Verbindungen, bevorzugt Trivinyl- und Triallylcyanurat; polyfunktionelle Vinylverbindungen, bevorzugt Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5 Gew.-%, insbesondere 0,05 bis 2 Gew.-%, bezogen auf die Pfropfgrundlage E.2.

Bei cyclischen vernetzenden Monomeren mit mindestens 3 ethylenisch ungesättigten Gruppen ist es vorteilhaft, die Menge auf unter 1 Gew.-% der Pfropfgrundlage E.2 zu beschränken.

Bevorzugte "andere" polymerisierbare, ethylenisch ungesättigte Monomere, die neben den Acrylsäureestern gegebenenfalls zur Herstellung der Pfropfgrundlage E.2 dienen können, sind Acrylnitril, Styrol, α-Methylstyrol, Acrylamide, Vinyl-C₁-C₆-alkylether, Methylmethacrylat, Glycidylmethacrylat, Butadien. Bevorzugte Acrylatkautschuke als Pfropfgrundlage E.2 sind Emulsionspolymerisate, die einen Gelgehalt von mindestens 60 Gew.-% aufweisen.

Neben Elastomermodifikatoren, die auf Propfpolymeren beruhen, können ebenfalls nicht auf Propfpolymeren basierende Elastomermodifikatoren eingesetzt werden, die Glasübergangstemperaturen < 10°C, vorzugsweise < 0°C, besonders bevorzugt < -20°C aufweisen. Bevorzugt gehören hierzu Elastomere mit einer Blockcopolymerstruktur sowie weiterhin thermoplastisch aufschmelzbare Elastomere, insbesondere EPM-, EPDM- und/oder SEBS-Kautschuke (EPM = Ethylen-Propylen-Copolymer, EPDM = Ethylen-Propylen-Dien-Kautschuk und SEBS = Styrol-Ethen-Buten-Styrol Copolymer).

Als Komponente E) einzusetzende **Gleit- und Entformungsmittel** sind bevorzugt solche aus der Reihe der langkettigen Fettsäuren, der Salze langkettiger Fettsäuren, der Esterderivate langkettiger Fettsäuren sowie der Montanwachse.

Bevorzugte langkettige Fettsäuren sind Stearinsäure oder Behensäure. Bevorzugte Salze der langkettigen Fettsäuren sind Ca-, Mg-, Al-, oder Zn-Stearat. Bevorzugte Esterderivate langkettiger Fettsäuren sind solche auf Basis von Pentaerythritol, insbesondere C₁₆-C₁₈ Fettsäureester des Pentaerythritols [CAS Nr. 68604-44-4] oder [CAS Nr. 85116-93-4].

Montanwachse im Sinne der vorliegenden Erfindung sind Mischungen aus geradkettigen, gesättigten Carbonsäuren mit Kettenlängen von 28 bis 32 C Atomen. Erfindungsgemäß besonders bevorzugt werden Gleit- und/oder Entformungsmittel aus der Gruppe der Ester gesättigter oder ungesättigter aliphatischer Carbonsäuren mit 8 bis 40 C-Atomen mit aliphatischen gesättigten Alkoholen mit 2 bis 40 C-Atomen sowie Metallsalze gesättigter oder ungesättigter aliphatischer Carbonsäuren mit 8 bis 40 C-Atomen eingesetzt, wobei Pentaerythritoltetrastearat, Calciumstearat [CAS Nr. 1592-23-0] und/oder Ethylenglycoldimontanat, hier insbesondere Licowax^{®} E [CAS-Nr. 74388-22-0] der Fa. Clariant, Muttenz, Basel ganz besonders bevorzugt ist und Pentaerythritoltetrastearat [CAS-Nr. 115-83-3] z. B. erhältlich als Loxiol^{®} P861 der Fa. Emery Oleochemicals GmbH, Düsseldorf, Deutschland insbesondere ganz besonders bevorzugt ist.

Als Komponente E) bevorzugt einzusetzende weitere **Flammschutzmittel** sind von Komponente B) und C) verschiedene mineralische Flammschutzmittel, stickstoffhaltige Flammschutzmittel oder phosphorhaltige Flammschutzmittel.

In einer alternativen Ausführungsform können dabei - sofern der Bedarf es erfordert unter Berücksichtigung der Nachteile durch den Verlust der Lasertransparenz - auch solche Flammschutzmittel eingesetzt werden, die als Laserabsorber sich negativ auf die Lasertransmission eines Erzeugnisses auf Basis erfindungsgemäßer Polymerzusammensetzungen auswirken.

Unter den mineralischen Flammschutzmitteln ist Magnesiumhydroxid besonders bevorzugt.

In einer alternativen Ausführungsform können als Flammschutzmittel der Komponente E) aber auch - sofern es der Bedarf erfordert - stickstoffhaltige Flammschutzmittel und Flammschutzmittelsynergisten eingesetzt werden. Bevorzugte als Komponente E) einzusetzende stickstoffhaltige Flammschutzmittel sind die Reaktionsprodukte aus Trichlortriazin, Piperazin und Morpholin gemäß CAS Nr. 1078142-02-5, insbesondere MCA PPM Triazin HF der Fa. MCA Technologies GmbH, Biel-Benken, Schweiz, ferner Melamincyanurat oder Kondensationsprodukte des Melamins, insbesondere Melem, Melam, Melon bzw. höherkondensierte Verbindungen dieses Typs. Bevorzugte anorganische stickstoffhaltige Verbindungen sind Ammoniumsalze.

Ferner können auch Salze aliphatischer und aromatischer Sulfonsäuren und mineralische Flammschutzadditive, insbesondere Aluminiumhydroxid oder Ca-Mg-Carbonat-Hydrate **(**DE-A 4 236 122**)** als für Komponente E) einzusetzende Flammschutzmittel eingesetzt werden.

In Frage kommen für den Einsatz als Flammschutzmittel der Komponente E) ferner Flammschutzmittelsynergisten aus der Gruppe der sauerstoff- stickstoff- oder schwefelhaltigen Metallverbindungen. Bevorzugt sind dabei zinkfreie Verbindungen insbesondere Molybdänoxid, Magnesiumoxid, Magnesiumcarbonat, Calciumcarbonat, Calciumoxid, Titannitrid, Magnesiumnitrid, Calciumphosphat, Calciumborat, Magnesiumborat oder deren Mischungen, wobei Calciumcarbonat ganz besonders bevorzugt ist. Dabei wiederum vorzugsweise einzusetzendes Calciumcarbonat hat eine mittels Laserdiffraktometrie gemäß ISO 13320 zu bestimmende mittlere Teilchengröße (d50) im Bereich von 0,5 µm bis 10 µm, wobei ein d50 im Bereich von 0,7 µm bis 5 µm bevorzugt und ein d50 im Bereich von 1,0 µm bis 3 µm besonders bevorzugt ist. Ein geeignetes Messgerät zur Bestimmung des d50 von Calciumcarbonat ist dabei beispielsweise der Mastersizer^{®} 2000 der Firma Malvern Panalytical GmbH, Kassel, Deutschland)

In einer alternativen Ausführungsform können als Flammschutzmittel der Komponente E) aber auch - sofern es der Bedarf erfordert - zinkhaltige Verbindungen eingesetzt werden. Hierzu zählen bevorzugt Zinkoxid, Zinkborat, Zinkstannat, Zinkhydroxystannat, Zinksulfid und Zinknitrid, oder deren Mischungen.

In einer alternativen Ausführungsform können als Flammschutzmittel der Komponente E) aber auch - sofern es der Bedarf erfordert - Calciumstannat oder Calciumhydroxystannat eingesetzt werden.

Als Komponente E) einzusetzende Flammschutzmittel verschieden von Komponente B) und C) werden vorzugsweise aber auch anorganische Aluminiumsalze der Phosphonsäure eingesetzt. Unter Phosphonsäure wird dabei gemäß Wikipedia der Stoff mit der Summenformel H₃PO₃ [CAS-Nr. 13598-36-2] (**http://de.wikipedia.org/wiki/Phosphons%C3%A4ure**) verstanden. Die Salze der Phosphonsäure werden Phosphonate genannt. Die Phosphonsäure kann in zwei tautomeren Formen vorliegen, von denen eine ein freies Elektronenpaar am PhosphorAtom hat und die andere einen doppelt gebundenen Sauerstoff zum Phosphor (P=O) aufweist. Das Tautomeriegleichgewicht liegt dabei ganz auf der Seite der Form mit dem doppelt gebundenen Sauerstoff. Gemäß A. F. Holleman, E. Wiberg: Lehrbuch der Anorganischen Chemie. 101. Auflage. Walter de Gruyter, Berlin/New York 1995, ISBN 3-11-012641-9, S. 764 sollen die Begriffe "Phosphorige Säure" bzw. "Phosphite" nur für die tautomeren Spezies mit einem freien Elektronenpaar am Phosphor verwendet werden. Früher wurden die Begriffe "Phosphorige Säure" bzw. "Phosphite" allerdings auch für die tautomeren Formen mit doppelt gebundenem Sauerstoff zum Phosphor verwendet, so dass in der vorliegenden Erfindung die Begriffe Phosphonsäure und Phosphorige Säure bzw. Phosphonate und Phosphite synonym zueinander gebraucht werden.

Bevorzugt wird als Aluminiumsalz der Phosphonsäure mindestens eines aus der Gruppe
primäres Aluminiumphosphonat [Al(H₂PO₃)₃],
basisches Aluminiumphosphonat [Al(OH)H₂PO₃)₂·2H₂O],
Al₂(HPO₃)₃ • x Al₂O₃ • n H₂O mit x im Bereich von 2,27 bis 1 und n im Bereich von 0 bis 4,
Al₂(HPO₃)₃ • (H₂O)_{q} der Formel (V) worin q für 0, 1, 2, 3 oder 4 steht, insbesondere Aluminiumphosphonattetrahydrat [Al₂(HPO₃)₃ • 4H₂O] oder sekundäres Aluminiumphosphonat [Al₂(HPO₃)₃],
Al₂M_{z}(HPO₃)_{y}(OH)ᵥ • (H₂O)_{w} der Formel (VI) worin M Alkalimetallion(en) bedeutet und z im Bereich von 0,01 bis 1,5, y im Bereich von 2,63 - 3,5, v im Bereich von 0 bis 2 und w im Bereich von 0 bis 4 liegt, und
Al₂(HPO₃)ᵤ(H₂PO₃)ₜ • (H₂O)ₛ der Formel (VII) worin u im Bereich von 2 bis 2,99, t im Bereich von 2 bis 0,01 und s im Bereich von 0 bis 4 liegt,
wobei in Formel (VI) z, y und v sowie in Formel (VII) u und t nur solche Zahlen annehmen, dass das entsprechende Aluminiumsalz der Phosphonsäure als Ganzes ungeladen ist, ausgewählt.

Bevorzugte Alkalimetalle in Formel (VI) sind Natrium und Kalium.

Besonders bevorzugte Aluminiumsalze der Phosphonsäure werden ausgewählt aus der Gruppe
primäres Aluminiumphosphonat [Al(H₂PO₃)₃],
sekundäres Aluminiumphosphonat [Al₂(HPO₃)₃],
basisches Aluminiumphosphonat [Al(OH)H₂PO₃)₂·2H₂O],
Aluminiumphosphonattetrahydrat [Al₂(HPO₃)₃·4H₂O] und
Al₂(HPO₃)₃·x Al₂O₃·n H₂O mit x im Bereich von 2,27 bis 1 und n im Bereich von 0 bis 4.

Ganz besonders bevorzugt sind sekundäres Aluminiumphosphonat [Al₂(HPO₃)₃], CAS-Nr. 71449-76-8] und sekundäres Aluminiumphosphonattetrahydrat [Al₂(HPO₃)₃·4H₂O], CAS-Nr. 156024-71-4], insbesondere bevorzugt ist sekundäres Aluminiumphosphonat [Al₂(HPO₃)₃].

Bevorzugte weitere phosphorhaltige Flammschutzmittel verschieden von Komponente B) und C) sind ferner weitere organische Metallphosphinate, roter Phosphor, anorganische Metallhypophosphite, weitere Metallphosphonate, Derivate der 9,10-Dihydro-9-oxa-10-phosphaphenanthren-10-oxide (DOPO-Derivate), Resorcinol-bis-(diphenylphosphat) (RDP) einschließlich Oligomere, Bisphenol-A-bis-diphenylphosphat (BDP) einschließlich Oligomere, Melaminpyrophosphat, Melaminpolyphosphat, Melamin-poly(aluminiumphosphat), Melamin-poly(zinkphosphat) oder Phenoxyphosphazenoligomere und deren Mischungen.

Weitere als Komponente E) einzusetzende Flammschutzmittel sind Kohlebildner, besonders bevorzugt Phenol-Formaldehydharze, Polycarbonate, Polyimide, Polysulfone, Polyethersulfone oder Polyetherketone sowie Antitropfmittel, insbesondere Tetrafluorethylenpolymerisate.

Die als Komponente E) einzusetzenden Flammschutzmittel können in Reinform, sowie über Masterbatche oder Kompaktate zugesetzt werden.

In einer alternativen Ausführungsform können als Flammschutzmittel aber auch - sofern der Bedarf es erfordert unter Berücksichtigung der Nachteile unter anderem durch den Verlust der Halogenfreiheit der Flammschutzmittel - halogenhaltige Flammschutzmittel eingesetzt werden. Bevorzugte halogenhaltige Flammschutzmittel sind handelsübliche organische Halogenverbindungen, besonders bevorzugt Ethylen-1,2-bistetrabromphthalimid, Decabromdiphenylethan, Tetrabrombisphenol-A-epoxyoligomer, Tetrabrombisphenol-A-oligocarbonat, Tetrachlorbisphenol-A-oligocarbonat, Polypentabrombenzylacrylat, bromiertes Polystyrol oder bromierte Polyphenylenether, die alleine oder in Kombination mit Synergisten, insbesondere - sofern es der besondere Einsatz mit Blick auf Nachteile bei der Lasertransmission erfordert - Antimontrioxid oder Antimonpentoxid, eingesetzt werden können, wobei unter den halogenhaltigen Flammschutzmitteln Tetrabrombisphenol-A-epoxyoligomer und Tetrabrombisphenol-A-oligocarbonat besonders bevorzugt sind.

In einer alternativen Ausführungsform können - sofern der Bedarf es erfordert gegebenenfalls unter Berücksichtigung der Nachteile bei der Lasertransmission - auch weitere von Komponente D) verschiedene Füll- und Verstärkungsstoffe eingesetzt werden.

Vorzugsweise handelt es sich dabei um wenigstens ein Füll- und/oder Verstärkungsstoff aus der Gruppe Kohlenstofffasern [CAS Nr. 7440-44-0], Calciumsilicat [CAS Nr. 1344-95-2], Calciummetasilicat [CAS Nr. 10101-39-0], Magnesiumcarbonat [CAS Nr. 546-93-0], Kaolin [CAS Nr. 1332-58-7], calciniertes Kaolin [CAS Nr. 92704-41-1], Kreide [CAS Nr.1317-65-3], Kyanit [CAS Nr. 1302-76-7], gepulverter oder gemahlener Quarz [CAS Nr. 14808-60-7], Glimmer [CAS Nr. 1318-94-1], Phlogopit [CAS Nr. 12251-00-2], Feldspat [CAS Nr. 68476-25-5], Wollastonit [CAS Nr. 13983-17-0], Montmorillonit [CAS Nr. 67479-91-8], Pseudoböhmit der Formel AlO(OH), Magnesiumcarbonat [CAS Nr. 12125-28-9] und Talkum [CAS Nr. 14807-96-6] und - sofern es der Bedarf erfordert - auch Bariumsulfat [CAS Nr. 7727-43-7].

Unter den faserförmigen Füllstoffen oder Verstärkungsstoffen verschieden von Komponente D) ist Wollastonit besonders bevorzugt. Im Falle eines laserabsorbierenden Bauteils bzw. Erzeugnisses können auch Kohlenstofffasern als Verstärkungsstoff eingesetzt werden.

Im Falle eines laserabsorbierenden Bauteils kann als Komponente E) unter Verlust der Eigenschaft einer hohen Lasertransmission wenigstens ein **Laserabsorber** ausgewählt aus der Gruppe Antimontrioxid, Zinnoxid, Zinnorthophosphat, Bariumtitanat, Aluminiumoxid, Kupferhydroxyphosphat, Kupferorthophosphat, Kaliumkupferdiphosphat, Kupferhydroxid, Antimonzinnoxid, Bismuttrioxid und Antrachinon eingesetzt werden. Besonders bevorzugt sind Zinnoxid, Antimontrioxid oder Antimonzinnoxid. Ganz besonders bevorzugt ist Antimontrioxid.

Der Laserabsorber, insbesondere das Antimontrioxid, kann direkt als Pulver oder in Form von Masterbatchen eingesetzt werden. Bevorzugte Masterbatche sind solche auf Basis von Polyamid und/oder Polyolefinen, bevorzugt Polyethylen. Ganz besonders bevorzugt wird Antimontrioxid in Form eines Polyamid 6-basierten Masterbatches eingesetzt.

Der Laserabsorber kann einzeln oder als Gemisch mehrerer Laserabsorber eingesetzt werden.

Laserabsorber können Laserlicht einer bestimmten Wellenlänge absorbieren. In der Praxis liegt diese Wellenlänge im Bereich von 157 nm bis 10,6 µm. Beispiele für Laser dieser Wellenlängen sind in WO2009/003976 A1 beschrieben. Bevorzugt werden Nd:YAG Laser, mit denen Wellenlängen von 1064, 532, 355 und 266 nm realisiert werden können, und CO₂-Laser eingesetzt.

### Weitere bevorzugte Verwendungen

Die vorliegende Erfindung betrifft vorzugsweise die **Verwendung** von
B) Aluminiumsalzen der allgemeinen Formel (I) 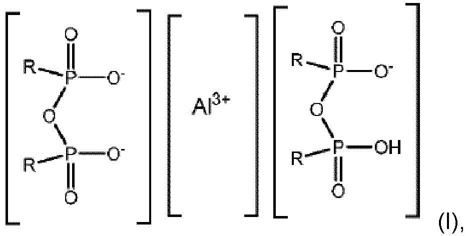 worin R für C₁-C₁₂-Alkyl steht, vorzugsweise für Methyl, Ethyl, Isopropyl oder iso-Butyl, tert.-Butyl oder n-Butyl, besonders bevorzugt für Ethyl oder Methyl, ganz besonders bevorzugt für Methyl, zum **Erreichen eines CTI A von 600 nach IEC 60112-2010 in oder bei Polyester basierten Erzeugnissen,** wobei 1 bis 80 Massenanteile, bevorzugt 2 bis 60 Massenanteile, besonders bevorzugt 3 bis 30 Massenanteile, insbesondere bevorzugt 5 bis 20 Massenanteile Aluminiumsalz der Formel (I) **auf 100 Massenanteile** als Komponente A) einzusetzendem Polyalkylenterephthalat oder Polycycloalkylenterephthalat, insbesondere Polybutylenterephthalat, Polyethylenterephthalat oder Poly-1,4-cyclohexandimethanolterephthalat, eingesetzt werden.

Die vorliegende Erfindung betrifft besonders bevorzugt die **Verwendung** von B) Aluminiummethylphosphonat der Formel (la) 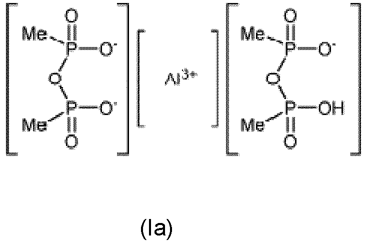 zum **Erreichen eines CTI A von 600 nach IEC 60112-2010 in oder bei Polyester basierten Erzeugnissen,** wobei 1 bis 80 Massenanteile, bevorzugt 2 bis 60 Massenanteile, besonders bevorzugt 3 bis 30 Massenanteile, insbesondere bevorzugt 5 bis 20 Massenanteile Aluminiumsalz der Formel (la) **auf 100 Massenanteile** als Komponente A) einzusetzendem Polyalkylenterephthalat oder Polycycloalkylenterephthalat, insbesondere Polybutylenterephthalat, Polyethylenterephthalat oder Poly-1,4-cyclohexandimethanolterephthalat, eingesetzt werden.

Die vorliegende Erfindung betrifft bevorzugt die **Verwendung** von B) Aluminiumsalzen der allgemeinen Formel (I) 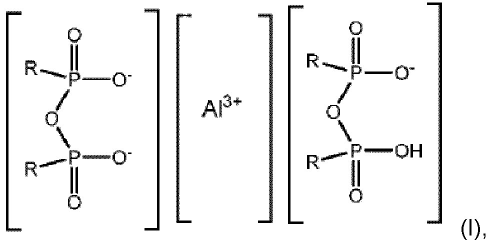 worin R für C₁-C₁₂-Alkyl steht, vorzugsweise für Methyl, Ethyl, Isopropyl oder iso-Butyl, tert.-Butyl oder n-Butyl, besonders bevorzugt für Ethyl oder Methyl, ganz besonders bevorzugt für Methyl, zum **Erreichen eines CTI A von 600 nach IEC 60112-2010 in Polyester basierten Erzeugnissen,** wobei 1 bis 80 Massenanteile, bevorzugt 2 bis 60 Massenanteile, besonders bevorzugt 3 bis 30 Massenanteile, insbesondere bevorzugt 5 bis 20 Massenanteile Aluminiumsalz der Formel (I) auf
**100 Massenanteile** als Komponente A) einzusetzendem Polyalkylenterephthalat oder Polycycloalkylenterephthalat, insbesondere Polybutylenterephthalat, Polyethylenterephthalat oder Poly-1,4-cyclohexandimethanolterephthalat,
   und
**5 bis 120 Massenanteile,** bevorzugt 7 bis 80 Massenanteile, besonders bevorzugt 8 bis 60 Massenanteile, insbesondere bevorzugt 10 bis 50 Massenanteile wenigstens eines als Komponente C) einzusetzendem organischen Phosphinsäuresalz der Formel (II) und/oder wenigstens einem Diphosphinsäuresalz der Formel (III) und/oder deren Polymere, 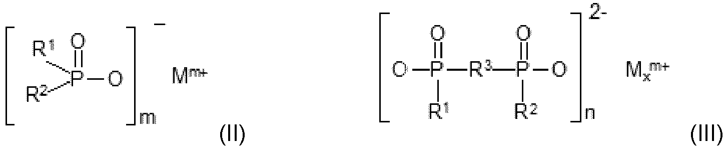
worin
R¹, R² gleich oder verschieden sind und für ein lineares oder verzweigtes C₁-C₆-Alkyl, und/oder für C₆-C₁₄-Aryl stehen,
R³ für lineares oder verzweigtes C₁-C₁₀-Alkylen, C₆-C₁₀-Arylen oder für C₁-C₆- Alkyl-C₆-C₁₀-arylen oder C₆-C₁₀-Aryl-C₁-C₆-alkylen steht,
   - M: für Aluminium, Zink oder Titan steht,
   - m: für eine ganze Zahl von 1 bis 4 steht,
   - n: für eine ganze Zahl von 1 bis 3 steht,
   - x: für 1 und 2 steht,
wobei n, x und m in Formel (III) gleichzeitig nur solche ganzen Zahlen annehmen können, dass das Diphosphinsäuresalz der Formel (III) als Ganzes ungeladen ist, eingesetzt werden und mit der **Maßgabe, dass Komponente B) in geringeren Massenanteilen als Komponente C) eingesetzt wird**.

Die vorliegende Erfindung betrifft besonders bevorzugt die Verwendung von
B) Aluminiummethylphosphonat der Formel (la) 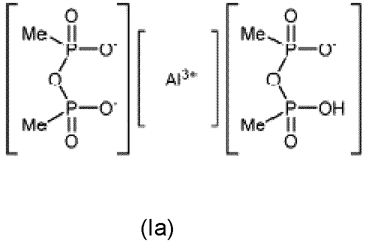
zum **Erreichen eines CTI A von 600 nach IEC 60112-2010 in oder bei Polyester basierten Erzeugnissen,** wobei 1 bis 800 Massenanteile, bevorzugt 2 bis 60 Massenanteile, besonders bevorzugt 3 bis 30 Massenanteile, insbesondere bevorzugt 5 bis 20 Massenanteile Aluminiumsalz der Formel (la) auf
**100 Massenanteile** als Komponente A) einzusetzendem Polyalkylenterephthalat oder Polycycloalkylenterephthalat, insbesondere Polybutylenterephthalat, Polyethylenterephthalat oder Poly-1,4-cyclohexandimethanolterephthalat,
   und
**5 bis 120 Massenanteile,** bevorzugt 7 bis 80 Massenanteile, besonders bevorzugt 8 bis 60 Massenanteile, insbesondere bevorzugt 10 bis 50 Massenanteile wenigstens eines als Komponente C) einzusetzendem organischen Phosphinsäuresalz der Formel (II) und/oder wenigstens einem Diphosphinsäuresalz der Formel (III) und/oder deren Polymere, 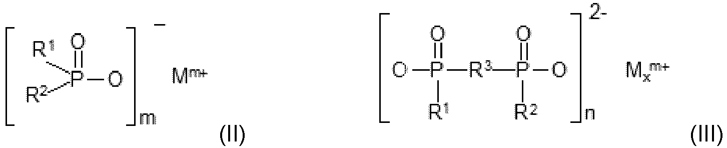
worin
R¹, R² gleich oder verschieden sind und für ein lineares oder verzweigtes C₁-C₆-Alkyl, und/oder für C₆-C₁₄-Aryl stehen,
R³ für lineares oder verzweigtes C₁-C₁₀-Alkylen, C₆-C₁₀-Arylen oder für C₁-C₆- Alkyl-C₆-C₁₀-arylen oder C₆-C₁₀-Aryl-C₁-C₆-alkylen steht,
   - M: für Aluminium, Zink oder Titan steht,
   - m: für eine ganze Zahl von 1 bis 4 steht,
   - n: für eine ganze Zahl von 1 bis 3 steht,
   - x: für 1 und 2 steht,
wobei n, x und m in Formel (III) gleichzeitig nur solche ganzen Zahlen annehmen können, dass das Diphosphinsäuresalz der Formel (III) als Ganzes ungeladen ist, eingesetzt werden und mit der **Maßgabe, dass Komponente B) in geringeren Massenanteilen als Komponente C) eingesetzt wird.**

Die vorliegende Erfindung betrifft besonders bevorzugt die **Verwendung** von
B) Aluminiummethylphosphonat der Formel (la) 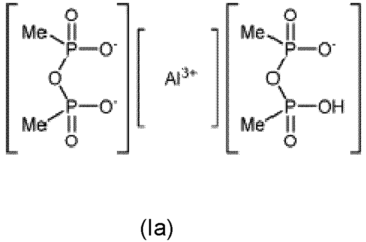
zum **Erreichen eines CTI A von 600 nach IEC 60112-2010 in oder bei Polyester basierten Erzeugnissen,** wobei 1 bis 80 Massenanteile, bevorzugt 2 bis 60 Massenanteile, besonders bevorzugt 3 bis 30 Massenanteile, insbesondere bevorzugt 5 bis 20 Massenanteile Aluminiumsalz der Formel (la) auf
**100 Massenanteile** als Komponente A) einzusetzendem Polyalkylenterephthalat oder Polycycloalkylenterephthalat, insbesondere Polybutylenterephthalat, Polyethylenterephthalat oder Poly-1,4-cyclohexandimethanolterephthalat,
   und
**5 bis 120 Massenanteile,** bevorzugt 7 bis 80 Massenanteile, besonders bevorzugt 8 bis 60 Massenanteile, insbesondere bevorzugt 10 bis 50 Massenanteile Aluminium-tris(diethylphosphinat) eingesetzt werden und mit der **Maßgabe, dass Komponente B) in geringeren Massenanteilen als Komponente C) eingesetzt wird.**

Die vorliegende Erfindung betrifft bevorzugt die Verwendung von
B) Aluminiumsalzen der allgemeinen Formel (I) 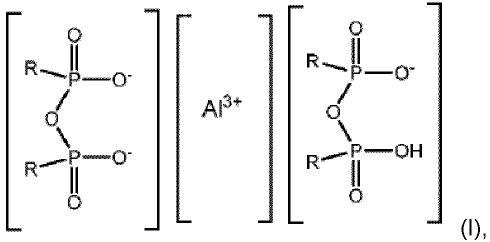
worin R für C₁-C₁₂-Alkyl steht, vorzugsweise für Methyl, Ethyl, Isopropyl oder iso-Butyl, tert.-Butyl oder n-Butyl, besonders bevorzugt für Ethyl oder Methyl, ganz besonders bevorzugt für Methyl, zum **Erreichen eines CTI A von 600 nach IEC 60112-2010 in oder bei Polyester basierten Erzeugnissen,** wobei 1 bis 80 Massenanteile, bevorzugt 2 bis 60 Massenanteile, besonders bevorzugt 3 bis 30 Massenanteile, insbesondere bevorzugt 5 bis 20 Massenanteile Aluminiumsalz der Formel (I) auf
**100 Massenanteile** als Komponente A) einzusetzendem Polyalkylenterephthalat oder Polycycloalkylenterephthalat, insbesondere Polybutylentherephthalat, Polyethylentherephthalat oder Poly-1,4-cyclohexandimethanolterephthalat,
   und
**5 bis 120 Massenanteile,** bevorzugt 7 bis 80 Massenanteile, besonders bevorzugt 8 bis 60 Massenanteile, insbesondere bevorzugt 10 bis 50 Massenanteile wenigstens eines als Komponente C) einzusetzendem organischen Phosphinsäuresalz der Formel (II) und/oder wenigstens einem Diphosphinsäuresalz der Formel (III) und/oder deren Polymere, 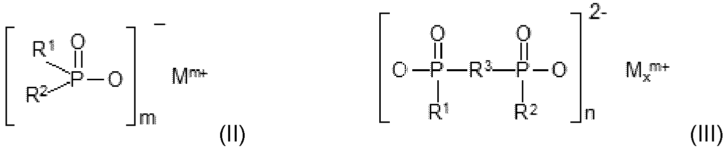
worin
R¹, R² gleich oder verschieden sind und für ein lineares oder verzweigtes C₁-C₆-Alkyl, und/oder für C₆-C₁₄-Aryl stehen,
R³ für lineares oder verzweigtes C₁-C₁₀-Alkylen, C₆-C₁₀-Arylen oder für C₁-C₆- Alkyl-C₆-C₁₀-arylen oder C₆-C₁₀-Aryl-C₁-C₆-alkylen steht,
   - M: für Aluminium, Zink oder Titan steht,
   - m: für eine ganze Zahl von 1 bis 4 steht,
   - n: für eine ganze Zahl von 1 bis 3 steht,
   - x: für 1 und 2 steht,
wobei n, x und m in Formel (III) gleichzeitig nur solche ganzen Zahlen annehmen können, dass das Diphosphinsäuresalz der Formel (III) als Ganzes ungeladen ist,
sowie
**3 bis 300 Massenanteile,** bevorzugt 5 bis 200 Massenanteile, besonders bevorzugt zu 10 bis 120 Massenanteile, insbesondere bevorzugt 15 bis 90 Massenanteile wenigstens eines als Komponente D) einzusetzendem **Glas basierten Füll- und/oder Verstärkungsstoff** eingesetzt werden mit der **Maßgabe, dass Komponente B) in geringeren Massenanteilen als Komponente C) eingesetzt wird.**

Die vorliegende Erfindung betrifft besonders bevorzugt die **Verwendung** von
B) Aluminiummethylphosphonat der Formel (la) 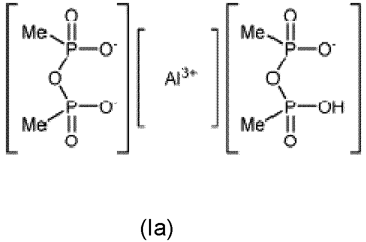
zum **Erreichen eines CTI A von 600 nach IEC 60112-2010 in oder bei Polyester basierten Erzeugnissen,** wobei 1 bis 80 Massenanteile, bevorzugt 2 bis 60 Massenanteile, besonders bevorzugt 3 bis 30 Massenanteile, insbesondere bevorzugt 5 bis 20 Massenanteile Aluminiumsalz der Formel (la) auf
**100 Massenanteile** als Komponente A) einzusetzendem Polyalkylenterephthalat oder Polycycloalkylenterephthalat, insbesondere Polybutylenterephthalat, Polyethylenterephthalat oder Poly-1,4-cyclohexandimethanolterephthalat,
**5 bis 120 Massenanteile,** bevorzugt 7 bis 80 Massenanteile, besonders bevorzugt 8 bis 60 Massenanteile, insbesondere bevorzugt 10 bis 50 Massenanteile wenigstens eines als Komponente C) einzusetzendem organischen Phosphinsäuresalz der Formel (II) und/oder wenigstens einem Diphosphinsäuresalz der Formel (III) und/oder deren Polymere, 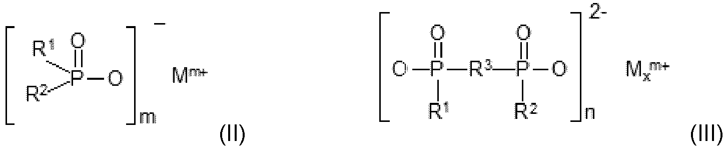
worin
R¹, R² gleich oder verschieden sind und für ein lineares oder verzweigtes C₁-C₆-Alkyl, und/oder für C₆-C₁₄-Aryl stehen,
R³ für lineares oder verzweigtes C₁-C₁₀-Alkylen, C₆-C₁₀-Arylen oder für C₁-C₆- Alkyl-C₆-C₁₀-arylen oder C₆-C₁₀-Aryl-C₁-C₆-alkylen steht,
   - M: für Aluminium, Zink oder Titan steht,
   - m: für eine ganze Zahl von 1 bis 4 steht,
   - n: für eine ganze Zahl von 1 bis 3 steht,
   - x: für 1 und 2 steht,
wobei n, x und m in Formel (III) gleichzeitig nur solche ganzen Zahlen annehmen können, dass das Diphosphinsäuresalz der Formel (III) als Ganzes ungeladen ist,
   und
**3 bis 300 Massenanteile,** bevorzugt 5 bis 200 Massenanteile, besonders bevorzugt zu 10 bis 120 Massenanteile, insbesondere bevorzugt 15 bis 90 Massenanteile wenigstens eines als Komponente D) einzusetzendem **Glas basierten Füll- und/oder Verstärkungsstoff** eingesetzt werden mit der **Maßgabe, dass Komponente B) in geringeren Massenanteilen als Komponente C) eingesetzt wird.**

Die vorliegende Erfindung betrifft besonders bevorzugt die **Verwendung** von
B) Aluminiummethylphosphonat der Formel (la) 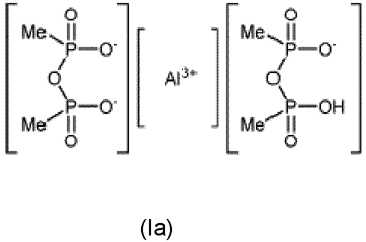
zum **Erreichen eines CTI A von 600 nach IEC 60112- in oder bei Polyester basierten Erzeugnissen,** wobei 1 bis 80 Massenanteile, bevorzugt 2 bis 60 Massenanteile, besonders bevorzugt 3 bis 30 Massenanteile, insbesondere bevorzugt 5 bis 20 Massenanteile Aluminiumsalz der Formel (la) auf
**100 Massenanteile** als Komponente A) einzusetzendem Polyalkylenterephthalat oder Polycycloalkylenterephthalat, insbesondere Polybutylenterephthalat, Polyethylenterephthalat oder Poly-1,4-cyclohexandimethanolterephthalat,
**5 bis 120 Massenanteile,** bevorzugt 7 bis 80 Massenanteile, besonders bevorzugt 8 bis 60 Massenanteile, insbesondere bevorzugt 10 bis 50 Massenanteile wenigstens eines als Komponente C) einzusetzendem organischen Phosphinsäuresalz der Formel (II) und/oder wenigstens einem Diphosphinsäuresalz der Formel (III) und/oder deren Polymere, 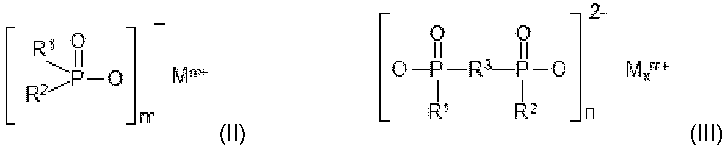
worin
R¹, R² gleich oder verschieden sind und für ein lineares oder verzweigtes C₁-C₆-Alkyl, und/oder für C₆-C₁₄-Aryl stehen,
R³ für lineares oder verzweigtes C₁-C₁₀-Alkylen, C₆-C₁₀-Arylen oder für C₁-C₆- Alkyl-C₆-C₁₀-arylen oder C₆-C₁₀-Aryl-C₁-C₆-alkylen steht,
   - M: für Aluminium, Zink oder Titan steht,
   - m: für eine ganze Zahl von 1 bis 4 steht,
   - n: für eine ganze Zahl von 1 bis 3 steht,
   - x: für 1 und 2 steht,
   wobei n, x und m in Formel (III) gleichzeitig nur solche ganzen Zahlen annehmen können, dass das Diphosphinsäuresalz der Formel (III) als Ganzes ungeladen ist,
   und
**3 bis 300 Massenanteile,** bevorzugt 5 bis 200 Massenanteile, besonders bevorzugt zu 10 bis 120 Massenanteile, insbesondere bevorzugt 15 bis 90 Massenanteile als Komponente D) einzusetzender **Glasfasern** eingesetzt werden mit der **Maßgabe, dass Komponente B) in geringeren Massenanteilen als Komponente C) eingesetzt wird.**

Die vorliegende Erfindung betrifft besonders bevorzugt die **Verwendung** von
B) Aluminiummethylphosphonat der Formel (la) 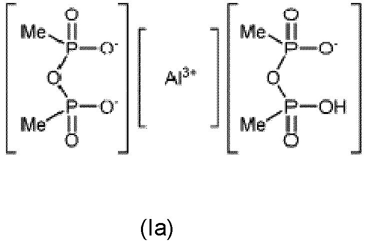
zum **Erreichen eines CTI** A von **600 nach IEC 60112-2010 in oder bei Polyester basierten Erzeugnissen,** wobei 1 bis 80 Massenanteile, bevorzugt 2 bis 60 Massenanteile, besonders bevorzugt 3 bis 30 Massenanteile, insbesondere bevorzugt 5 bis 20 Massenanteile Aluminiumsalz der Formel (la) auf
**100 Massenanteile** als Komponente A) einzusetzendem Polyalkylenterephthalat oder Polycycloalkylenterephthalat, insbesondere Polybutylenterephthalat, Polyethylenterephthalat oder Poly-1,4-cyclohexandimethanolterephthalat,
**5 bis 120 Massenanteile,** bevorzugt 7 bis 80 Massenanteile, besonders bevorzugt 8 bis 60 Massenanteile, insbesondere bevorzugt 10 bis 50 Massenanteile Aluminium-tris(diethylphosphinat) als Komponente C)
   und
**3 bis 300 Massenanteile,** bevorzugt 5 bis 200 Massenanteile, besonders bevorzugt zu 10 bis 120 Massenanteile, insbesondere bevorzugt 15 bis 90 Massenanteile wenigstens eines als Komponente D) einzusetzendem **Glas basierten Füll- und/oder Verstärkungsstoff** eingesetzt werden mit der **Maßgabe, dass Komponente B) in geringeren Massenanteilen als Komponente C) eingesetzt wird.**

Die vorliegende Erfindung betrifft besonders bevorzugt die Verwendung von
B) Aluminiummethylphosphonat der Formel (la) 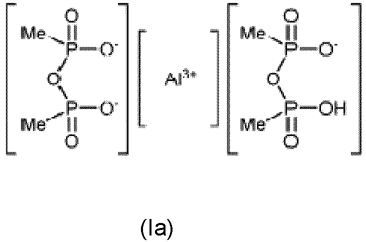
zum **Erreichen eines CTI** A von **600 nach IEC 60112-2010 in oder bei Polyester basierten Erzeugnissen,** wobei 1 bis 80 Massenanteile, bevorzugt 2 bis 60 Massenanteile, besonders bevorzugt 3 bis 30 Massenanteile, insbesondere bevorzugt 5 bis 20 Massenanteile Aluminiumsalz der Formel (la) auf
**100 Massenanteile** als Komponente A) einzusetzendem Polyalkylenterephthalat oder Polycycloalkylenterephthalat, insbesondere Polybutylenterephthalat, Polyethylenterephthalat oder Poly-1,4-cyclohexandimethanolterephthalat,
**5 bis 120 Massenanteile,** bevorzugt 7 bis 80 Massenanteile, besonders bevorzugt 8 bis 60 Massenanteile, insbesondere bevorzugt 10 bis 50 Massenanteile Aluminium-tris(diethylphosphinat) als Komponente C)
   und
**3 bis 300 Massenanteile,** bevorzugt 5 bis 200 Massenanteile, besonders bevorzugt zu 10 bis 120 Massenanteile, insbesondere bevorzugt 15 bis 90 Massenanteile als Komponente D) einzusetzender **Glasfasern** eingesetzt werden mit der **Maßgabe, dass Komponente B) in geringeren Massenanteilen als Komponente C) eingesetzt wird.**

Die vorliegende Erfindung betrifft vorzugsweise die **Verwendung** von
B) Aluminiumsalzen der allgemeinen Formel (I) 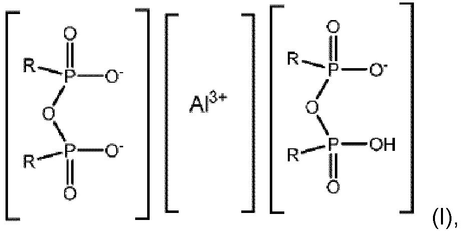 worin R für C₁-C₁₂-Alkyl steht, vorzugsweise für Methyl, Ethyl, Isopropyl oder iso-Butyl, tert.-Butyl oder n-Butyl, besonders bevorzugt für Ethyl oder Methyl, ganz besonders bevorzugt für Methyl, zum **Erreichen eines CTI A von 600 nach IEC 60112-2010 und einer nach DVS-Richtlinie 2243 (0112014) zu bestimmenden Lasertransmission von mindestens 8% bei Wandstärken von 1,5mm in oder bei Polyester basierten Erzeugnissen,** wobei 1 bis 80 Massenanteile, bevorzugt 2 bis 60 Massenanteile, besonders bevorzugt 3 bis 30 Massenanteile, insbesondere bevorzugt 5 bis 20 Massenanteile Aluminiumsalz der Formel (I) **auf 100 Massenanteile** als Komponente A) einzusetzendem Polyalkylenterephthalat oder Polycycloalkylenterephthalat, insbesondere Polybutylenterephthalat, Polyethylenterephthalat oder Poly-1,4-cyclohexan-dimethanolterephthalat, eingesetzt werden.

Die vorliegende Erfindung betrifft besonders bevorzugt die Verwendung von
B) Aluminiummethylphosphonat der Formel (la) 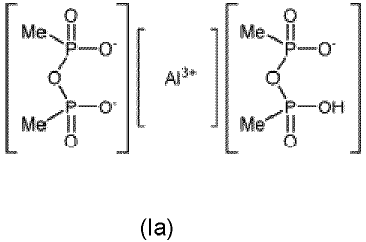 zum **Erreichen eines CTI A von 600 nach IEC 60112-2010 und einer nach DVS-Richtlinie 2243 (01/2014) zu bestimmenden Lasertransmission von mindestens 8% bei Wandstärken von 1,5mm in oder bei Polyester basierten Erzeugnissen,** wobei 1 bis 80 Massenanteile, bevorzugt 2 bis 60 Massenanteile, besonders bevorzugt 3 bis 30 Massenanteile, insbesondere bevorzugt 5 bis 20 Massenanteile Aluminiumsalz der Formel (la) **auf 100 Massenanteile** als Komponente A) einzusetzendem Polyalkylenterephthalat oder Polycycloalkylenterephthalat, insbesondere Polybutylenterephthalat, Polyethylenterephthalat oder Poly-1,4-cyclohexandimethanolterephthalat, eingesetzt werden.

Die vorliegende Erfindung betrifft bevorzugt die Verwendung von
B) Aluminiumsalzen der allgemeinen Formel (I) 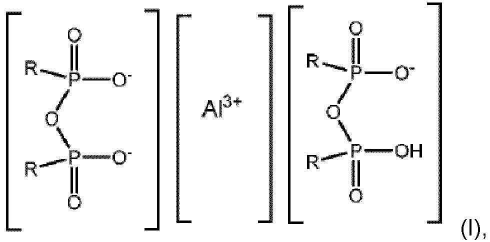
worin R für C₁-C₁₂-Alkyl steht, vorzugsweise für Methyl, Ethyl, Isopropyl oder iso-Butyl, tert.-Butyl oder n-Butyl, besonders bevorzugt für Ethyl oder Methyl, ganz besonders bevorzugt für Methyl, zum **Erreichen eines CTI A von 600 nach IEC 60112-2010 und einer nach DVS-Richtlinie 2243 (0112014) zu bestimmenden Lasertransmission von mindestens 8% bei Wandstärken von 1,5mm in oder bei Polyester basierten Erzeugnissen,** wobei 1 bis 80 Massenanteile, bevorzugt 2 bis 60 Massenanteile, besonders bevorzugt 3 bis 30 Massenanteile, insbesondere bevorzugt 5 bis 20 Massenanteile Aluminiumsalz der Formel (I) auf
**100 Massenanteile** als Komponente A) einzusetzendem Polyalkylenterephthalat oder Polycycloalkylenterephthalat, insbesondere Polybutylenterephthalat, Polyethylenterephthalat oder Poly-1,4-cyclohexandimethanolterephthalat,
   und
**5 bis 120 Massenanteile,** bevorzugt 7 bis 80 Massenanteile, besonders bevorzugt 8 bis 60 Massenanteile, insbesondere bevorzugt 10 bis 50 Massenanteile wenigstens eines als Komponente C) einzusetzendem organischen Phosphinsäuresalz der Formel (II) und/oder wenigstens einem Diphosphinsäuresalz der Formel (III) und/oder deren Polymere, 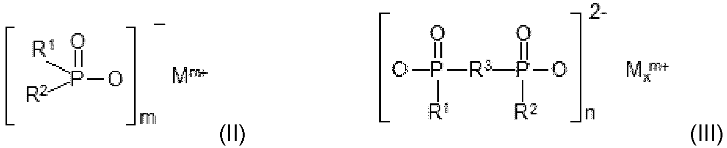
worin
R¹, R² gleich oder verschieden sind und für ein lineares oder verzweigtes C₁-C₆-Alkyl, und/oder für C₆-C₁₄-Aryl stehen,
R³ für lineares oder verzweigtes C₁-C₁₀-Alkylen, C₆-C₁₀-Arylen oder für C₁-C₆- Alkyl-C₆-C₁₀-arylen oder C₆-C₁₀-Aryl-C₁-C₆-alkylen steht,
   - M: für Aluminium, Zink oder Titan steht,
   - m: für eine ganze Zahl von 1 bis 4 steht;
   - n: für eine ganze Zahl von 1 bis 3 steht,
   - x: für 1 und 2 steht,
wobei n, x und m in Formel (III) gleichzeitig nur solche ganzen Zahlen annehmen können, dass das Diphosphinsäuresalz der Formel (III) als Ganzes ungeladen ist, eingesetzt werden **mit der Maßgabe, dass Komponente B) in geringeren Massenanteilen als Komponente C) eingesetzt wird.**

Die vorliegende Erfindung betrifft besonders bevorzugt die **Verwendung** von
B) Aluminiummethylphosphonat der Formel (la) 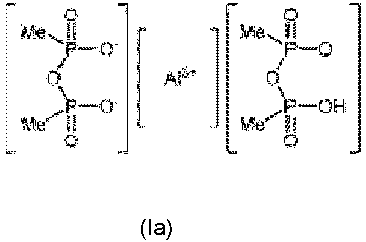
zum **Erreichen eines CTI A von 600 nach IEC 60112-2010 und einer nach DVS-Richtlinie 2243 (01/2014) zu bestimmenden Lasertransmission von mindestens 8% bei Wandstärken von 1,5mm in oder bei Polyester basierten Erzeugnissen**, wobei 1 bis 80 Massenanteile, bevorzugt 2 bis 60 Massenanteile, besonders bevorzugt 3 bis 30 Massenanteile, insbesondere bevorzugt 5 bis 20 Massenanteile Aluminiumsalz der Formel (la) auf
**100 Massenanteile** als Komponente A) einzusetzendem Polyalkylenterephthalat oder Polycycloalkylenterephthalat, insbesondere Polybutylenterephthalat, Polyethylenterephthalat oder Poly-1,4-cyclohexandimethanolterephthalat,
   und
**5 bis 120 Massenanteile,** bevorzugt 7 bis 80 Massenanteile, besonders bevorzugt 8 bis 60 Massenanteile, insbesondere bevorzugt 10 bis 50 Massenanteile wenigstens eines als Komponente C) einzusetzendem organischen Phosphinsäuresalz der Formel (II) und/oder wenigstens einem Diphosphinsäuresalz der Formel (III) und/oder deren Polymere, 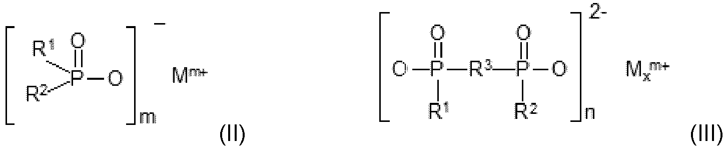
worin
R¹, R² gleich oder verschieden sind und für ein lineares oder verzweigtes C₁-C₆-Alkyl, und/oder für C₆-C₁₄-Aryl stehen,
R³ für lineares oder verzweigtes C₁-C₁₀-Alkylen, C₆-C₁₀-Arylen oder für C₁-C₆- Alkyl-C₆-C₁₀-arylen oder C₆-C₁₀-Aryl-C₁-C₆-alkylen steht,
   - M: für Aluminium, Zink oder Titan steht,
   - m: für eine ganze Zahl von 1 bis 4 steht;
   - n: für eine ganze Zahl von 1 bis 3 steht,
   - x: für 1 und 2 steht,
wobei n, x und m in Formel (III) gleichzeitig nur solche ganzen Zahlen annehmen können, dass das Diphosphinsäuresalz der Formel (III) als Ganzes ungeladen ist, eingesetzt werden **mit der Maßgabe, dass Komponente B) in geringeren Massenanteilen als Komponente C) eingesetzt wird.**

Die vorliegende Erfindung betrifft vorzugsweise die **Verwendung** von
B) Aluminiumsalzen der allgemeinen Formel (I) 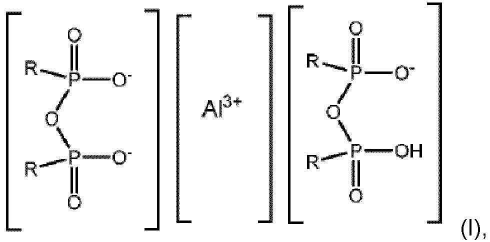
worin R für C₁-C₁₂-Alkyl steht, vorzugsweise für Methyl, Ethyl, Isopropyl oder iso-Butyl, tert.-Butyl oder n-Butyl, besonders bevorzugt für Ethyl oder Methyl, ganz besonders bevorzugt für Methyl, zum **Erreichen eines CTI A von 600 nach IEC 60112-2010 und einer nach DVS-Richtlinie 2243 (01/2014) zu bestimmenden Lasertransmission von mindestens 8% bei Wandstärken von 1,5mm in oder bei Polyester basierten Erzeugnissen,** wobei 1 bis 80 Massenanteile, bevorzugt 2 bis 60 Massenanteile, besonders bevorzugt 3 bis 30 Massenanteile, insbesondere bevorzugt 5 bis 20 Massenanteile Aluminiumsalz der Formel (I) auf
**100 Massenanteile** als Komponente A) einzusetzendem Polyalkylenterephthalat oder Polycycloalkylenterephthalat, insbesondere Polybutylenterephthalat, Polyethylenterephthalat oder Poly-1,4-cyclohexandimethanolterephthalat,
**5 bis 120 Massenanteile,** bevorzugt 7 bis 80 Massenanteile, besonders bevorzugt 8 bis 60 Massenanteile, insbesondere bevorzugt 10 bis 50 Massenanteile wenigstens einem als Komponente C) einzusetzendem organischen Phosphinsäuresalz der Formel (II) und/oder wenigstens einem Diphosphinsäuresalz der Formel (III) und/oder deren Polymere, 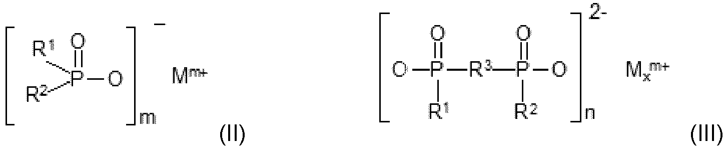
worin
R¹, R² gleich oder verschieden sind und für ein lineares oder verzweigtes C₁-C₆-Alkyl, und/oder für C₆-C₁₄-Aryl stehen,
R³ für lineares oder verzweigtes C₁-C₁₀-Alkylen, C₆-C₁₀-Arylen oder für C₁-C₆- Alkyl-C₆-C₁₀-arylen oder C₆-C₁₀-Aryl-C₁-C₆-alkylen steht,
   - M: für Aluminium, Zink oder Titan steht,
   - m: für eine ganze Zahl von 1 bis 4 steht;
   - n: für eine ganze Zahl von 1 bis 3 steht,
   - x: für 1 und 2 steht,
wobei n, x und m in Formel (III) gleichzeitig nur solche ganzen Zahlen annehmen können, dass das Diphosphinsäuresalz der Formel (III) als Ganzes ungeladen ist,
   und
**3 bis 300 Massenanteile,** bevorzugt 5 bis 200 Massenanteile, besonders bevorzugt zu 10 bis 120 Massenanteile, insbesondere bevorzugt 15 bis 90 Massenanteile wenigstens einem als Komponente D) einzusetzendem **Glas basierten Füll- und/oder Verstärkungsstoff** eingesetzt werden mit der **Maßgabe, dass Komponente B) in geringeren Massenanteilen als Komponente C) eingesetzt wird.**

Die vorliegende Erfindung betrifft besonders bevorzugt die **Verwendung** von
B) Aluminiummethylphosphonat der Formel (la) 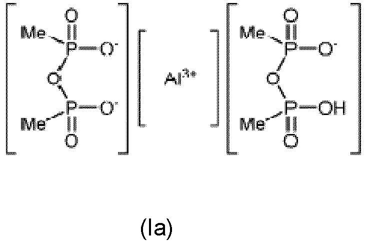
zum **Erreichen eines CTI A von 600 nach IEC 60112-2010 und einer nach DVS-Richtlinie 2243 (01/2014) zu bestimmenden Lasertransmission von mindestens 8% bei Wandstärken von 1,5mm in oder bei Polyester basierten Erzeugnissen,** wobei 1 bis 80 Massenanteile, bevorzugt 2 bis 60 Massenanteile, besonders bevorzugt 3 bis 30 Massenanteile, insbesondere bevorzugt 5 bis 20 Massenanteile Aluminiumsalz der Formel (la) auf
**100 Massenanteile** als Komponente A) einzusetzendem Polyalkylenterephthalat oder Polycycloalkylenterephthalat, insbesondere Polybutylenterephthalat, Polyethylenterephthalat oder Poly-1,4-cyclohexandimethanolterephthalat,
**5 bis 120 Massenanteile,** bevorzugt 7 bis 80 Massenanteile, besonders bevorzugt 8 bis 60 Massenanteile, insbesondere bevorzugt 10 bis 50 Massenanteile wenigstens einem als Komponente C) einzusetzendem organischen Phosphinsäuresalz der Formel (II) und/oder wenigstens einem Diphosphinsäuresalz der Formel (III) und/oder deren Polymere, 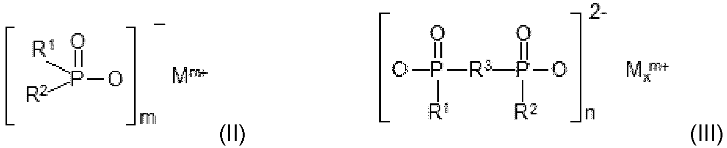
worin
R¹, R² gleich oder verschieden sind und für ein lineares oder verzweigtes C₁-C₆-Alkyl, und/oder für C₆-C₁₄-Aryl stehen,
R³ für lineares oder verzweigtes C₁-C₁₀-Alkylen, C₆-C₁₀-Arylen oder für C₁-C₆- Alkyl-C₆-C₁₀-arylen oder C₆-C₁₀-Aryl-C₁-C₆-alkylen steht,
   - M: für Aluminium, Zink oder Titan steht,
   - m: für eine ganze Zahl von 1 bis 4 steht;
   - n: für eine ganze Zahl von 1 bis 3 steht,
   - x: für 1 und 2 steht,
wobei n, x und m in Formel (III) gleichzeitig nur solche ganzen Zahlen annehmen können, dass das Diphosphinsäuresalz der Formel (III) als Ganzes ungeladen ist,
   und
**3 bis 300 Massenanteile,** bevorzugt 5 bis 200 Massenanteile, besonders bevorzugt zu 10 bis 120 Massenanteile, insbesondere bevorzugt 15 bis 90 Massenanteile wenigstens einem als Komponente D) einzusetzendem **Glas basierten Füll- und/oder Verstärkungsstoff** eingesetzt werden mit der **Maßgabe, dass Komponente B) in geringeren Massenanteilen als Komponente C) eingesetzt wird.**

Die Erfindung betrifft schließlich die Verwendung der erfindungsgemäßen Zusammensetzungen zur Herstellung von Erzeugnissen, vorzugsweise von Erzeugnissen für die Elektromobilität, für Haushaltsgeräte sowie im Elektronik- und Elektrobereich.

### Weitere bevorzugte Zusammensetzungen

Gegenstand der Erfindung sind Zusammensetzungen enthaltend
A) auf 100 Massenanteile Polybutylenterephthalat, Polyethylenterephthalat oder Poly-1,4-cyclohexandimethanolterephthalat,
B) 1 bis 80 Massenanteile, bevorzugt 2 bis 60 Massenanteile, besonders bevorzugt 3 bis 30 Massenanteile, insbesondere bevorzugt 5 bis 20 Massenanteile Aluminiummethylphosphonat der Formel (la) 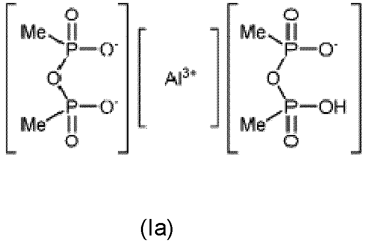
C) 5 bis 120 Massenanteile, bevorzugt 7 bis 80 Massenanteile, besonders bevorzugt 8 bis 60 Massenanteile, Aluminium-tris(diethylphosphinat), und
D) 3 bis 300 Massenanteile, bevorzugt 5 bis 200 Massenanteile, besonders bevorzugt zu 10 bis 120 Massenanteile, insbesondere bevorzugt 15 bis 90 Massenanteile Glasfasern
mit der Maßgabe, dass Komponente B) in geringeren Massenanteilen als Komponente C) vorliegt.

Ganz besonders bevorzugt sind Zusammensetzungen worin als Komponente A) Polybutylenterephthalat, als Komponente B) Aluminiummethylphosphonat der Formel (la) 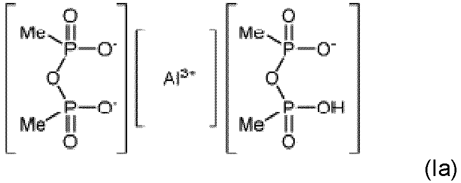 als Komponente C) Aluminium-tris(diethylphosphinat) und als Komponente D) Glasfasern eingesetzt werden.

### Weitere bevorzugte Verfahren

Erfindungsgemäß bevorzugt ist zudem ein **Verfahren** zur Herstellung von Erzeugnissen, vorzugsweise Erzeugnissen für die Elektromobilität, für Haushaltsgeräte sowie im Elektronik- und Elektrobereich, indem man die Komponente A) 100 Massenanteile Polybutylenterephthalat, Polyethylenterephthalat oder Poly-1,4-cyclohexandimethanolterephthalat mit
B) 1 bis 80 Massenanteilen, bevorzugt 2 bis 60 Massenanteilen, besonders bevorzugt 3 bis 30 Massenanteilen, insbesondere bevorzugt 5 bis 20 Massenanteilen Aluminiummethylphosphonat der Formel (la) 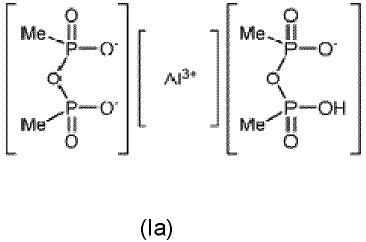
C) 5 bis 120 Massenanteile, bevorzugt 7 bis 80 Massenanteile, besonders bevorzugt 8 bis 60 Massenanteile, Aluminium-tris(diethylphosphinat), und
D) 3 bis 300 Massenanteile, bevorzugt 5 bis 200 Massenanteile, besonders bevorzugt zu 10 bis 120 Massenanteile, insbesondere bevorzugt 15 bis 90 Massenanteile Glasfasern
sowie gegebenenfalls mit weiteren Additiven in wenigstens einem Mischaggregat mischt oder vermengt und schließlich im Spritzguss verarbeitet mit der Maßgabe, dass Komponente B) in geringeren Massenanteilen als Komponente C) eingesetzt wird.

Ganz besonders bevorzugt sind Verfahren, worin als Komponente A) Polybutylenterephthalat, als Komponente B) Aluminiummethylphosphonat der Formel (la) 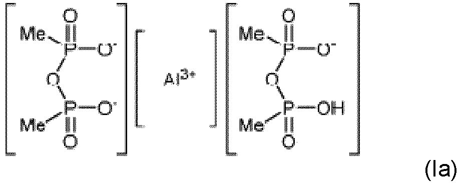 als Komponente C) Aluminium-tris(diethylphosphinat) und als Komponente D) Glasfasern eingesetzt werden.

### Beispiele

Zum Nachweis der erfindungsgemäß beschriebenen Verbesserungen der Eigenschaften wurden zunächst durch Compoundierung entsprechende Polyalkylenterephthalat oder Polycycloalkylenterephthalat basierte Polymerzusammensetzungen angefertigt. Die einzelnen Komponenten gemäß **Tab. I** wurden hierzu in einem Zweiwellenextruder (ZSK 25 Compounder der Fa. Coperion Werner & Pfleiderer (Stuttgart, Deutschland)) bei Temperaturen im Bereich von 260 bis 290°C gemischt, als Strang ausgetragen, bis zur Granulierbarkeit abgekühlt und granuliert. Nach dem Trocknen, in der Regel 2 Stunden bei 120°C im Trockenlufttrockner, erfolgte die Verarbeitung des Granulats im Spritzguss bei Temperaturen im Bereich von 260 bis 290°C zu Normprüfkörpern für die jeweiligen Prüfungen, wobei eine Spritzgießmaschine des Typs Arburg 320-210-500 verwendet wurde.

Die Herstellung des als Komponente B) in den Beispielen und Vergleichsbeispielen eingesetzten Aluminiummethylphosphonats der Formel (la) erfolgte gemäß Beispiel 1 der WO 2021/076169 A1**.**

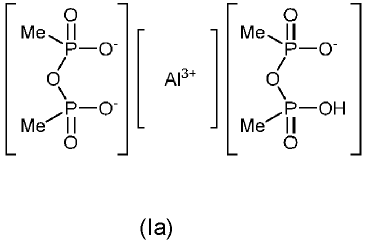

### KRIECHSTROM FESTIGKEIT

Die **Kriechstromfestigkeit** (engl. "Comparative Tracking Index") wurde in Anlehnung an IEC 60112-2010 an Prüfkörpern der Abmessung 60mm • 40mm • 4mm bei einer Prüfspannung von 600V mit Prüflösung A bestimmt.

Dabei wurde abweichend von der Norm anstatt jeweils 50 Tropfen an 5 Probekörper (250 Tropfen) noch anspruchsvoller mit jeweils 100 Tropfen an 3 Probekörpern (insgesamt 300 Tropfen) geprüft und dabei der Mittelwert der Tropfenzahl bis zum Versagen des Materials infolge eines Kriechstromes von > 0,5 A oder einer Entzündung mit nachfolgend andauernder Flamme des Probekörpers. ermittelt.

### LASERTRANSPARENZ

Die **Lasertransparenz** der im Rahmen der vorliegenden Erfindung untersuchten Proben wurde in Übereinstimmung mit der **DVS-Richtlinie 2243 (0112014) "Laserstrahlschweißen thermoplastischer Kunststoffe"** anhand von Prüfkörpern mit der Abmessung 125 mm • 13 mm • 1,5 mm im nahen Infrarot (NIR) mit dem Transmissionsmessgerät LPKF TMG3 der Firma LPKF Laser & Electronics AG, Garbsen, Deutschland, das zuvor mit einem nach DIN EN ISO/IEC 17025 erzeugten Messnormal kalibriert wurde, bei einer Laserwellenlänge von 980 nm gemessen; siehe: **LPKF AG 101016-DE: "Einfache Transmissionsmessung für Kunststoffe LPKF TMG3".**

### FLAMMSCHUTZ

Die **Flammwidrigkeit** der Prüfkörper mit einer Abmessung von 125 mm • 13 mm • 0,75 mm wurde nach der Methode UL94V **(**Underwriters Laboratories Inc. Standard of Safety, "Test for Flammability of Plastic Materials for Parts in Devices and Appliances", S. 14 - 18 Northbrook 1998**)** bestimmt.

### IZOD SCHLAGZÄHIGKEIT

Die **Schlagzähigkeit** nach IZOD erhielt man gemäß **ISO180-A** an Prüfkörpern der Abmessung 80 mm • 10 mm • 4 mm.

Die **Biegefestigkeit** und die **Randfaserdehnung** erhielt man aus Biegeversuchen gemäß **ISO178** an Prüfkörpern der Abmessung 80 mm • 10 mm • 4 mm.

### Edukte:

| | |
|---|---|
| Komponente A/1): | Lineares Polybutylenterephthalat (Mischung aus Pocan^{®} B 1300, mit einer Intrinsischen Viskosität von 93 cm³/g (jeweils gemessen in Phenol : 1,2-Dichlorbenzol = 1:1 bei 25°C) im Verhältnis von 3:2. Beide Pocan^{®}-Typen sind Handelsprodukte der Lanxess Deutschland GmbH, Köln, Deutschland. |
| Komponente B/1): | Aluminiummethylphosphonat der Formel (la) hergestellt nach WO 2021/076169 A1**,** Beispiel 1 |
| Komponente C/1): | Aluminium-tris(diethylphosphinat), [CAS-Nr. 225789-38-8] (Exolit^{®} OP1240 der Fa. Clariant SE, Muttenz, Schweiz) |
| Komponente D/1): | Geschnittene Glasfaser CS 7967D der Firma Lanxess Deutschland GmbH, Köln, Deutschland [mittlerer Faserdurchmesser 10 µm, mittlere Faserlänge 4,5 mm, E-Glas (DIN 1259), mit Silan beschlichtet] |
| Komponente E): | Als weitere Additive der Komponente E) wurden in den Beispielen die folgenden, für die Verwendung in flammgeschützten thermoplastischen Polyestern gebräuchlichen Komponenten eingesetzt: |
| | Antidripping-Additiv: Polytetrafluorethylen, [CAS Nr. 9002-84-0] (Dyneon^{®} PA 5932 der Fa. Dyneon GmbH & Co KG, Neuss, Deutschland) |
| | Thermostabilisator: Tetrakis(2,4-di-tert-butylphenyl)-1,1-biphenyl-4,4'-diylbisphosphonit [CAS Nr. 38613-77-3] (Hostanox^{®} P-EPQ von der Fa. Clariant International Ltd., Muttenz, Schweiz) |
| | Entformungsmittel: Pentaerythrit-tetrastearat (PETS) [CAS Nr. 115-83-3] (Loxiol^{®} VPG 861, Fa. Cognis Deutschland GmbH, Düsseldorf, Deutschland) |
| | Die verwendeten weiteren Additive (Komponente E) stimmen für entsprechende Vergleichsbeispiele und Beispiele jeweils in Art und Menge überein und zwar mit in Summe 1,0 Massenanteilen |
| Komponente X/1): | Melamincyanurat, (Melapur^{®} MC25, der Fa. BASF SE, Ludwigshafen, Deutschland) |

**Tab. I**

| | | **Bsp. 1** | **Vgl. 1** | **Vgl. 2** |
|---|---|---|---|---|
| Komponente A/1 | Massenanteil | 100 | 100 | 100 |
| Komponente B/1 | Massenanteil | 9,5 | 0,0 | 0,0 |
| Komponente C/1 | Massenanteil | 27,6 | 27,6 | 37,1 |
| Komponente D/1 | Massenanteil | 34,5 | 34,5 | 34,5 |
| Komponente E | Massenanteil | 1,0 | 1,0 | 1,0 |
| Komponente X/1 | Massenanteil | 0,0 | 9,5 | 0,0 |
| UL94 (0,75mm) | [Klasse] | V0 | V0 | - |
| CTI A bei 600V | [Tropfenzahl, Mittelwert] | 100 | >50, < 100 | <50 |
| IZOD | [kJ/m²] | 35 | < 30 | - |
| Biegefestigkeit | [MPa] | 149 | 143 | - |
| Randfaserdehnung | [%] | 2,8 | < 2,5 | - |
| LPKF-Lasertransmission | [%] | 9,7 | <8 | - |

Angaben der Komponenten in **Tab. I** in Massenanteile bezogen auf 100 Massenanteile der Komponente A1

**Tab. I** zeigt, dass nur das erfindungsgemäße Beispiel 1 sowohl eine UL94 Klassifizierung V0 bei 0,75mm zeigt, als auch im Vergleich zur Norm unter deutlich anspruchsvolleren Bedingungen mit jeweils 100 Tropfen an 3 Probekörpern (insgesamt 300 Tropfen) einen CTI A bei 600V besteht und darüber hinaus auch noch eine Lasertransmission deutlich oberhalb von 8% an einem 1,5mm dicken Probekörper aufweist.

Verglichen mit einer Rezeptur enthaltend ein stickstoffhaltiges Flammschutzmittel (Vgl. 1) zeigt Beispiel 1 ferner eine bessere mechanische Performance, was sich exemplarisch an höheren Werten bei der Schlagzähigkeit nach IZOD und einer besseren Randfaserdehnung zeigt.

## Patentansprüche

1. Zusammensetzungen enthaltend
A) auf 100 Massenanteile Polyalkylenterephthalat oder Polycycloalkylenterephthalat,
B) 1 bis 80 Massenanteile, bevorzugt 2 bis 60 Massenanteile, besonders bevorzugt 3 bis 30 Massenanteile, insbesondere bevorzugt 5 bis 20 Massenanteile wenigstens eines Aluminiumsalzes der allgemeinen Formel (I) 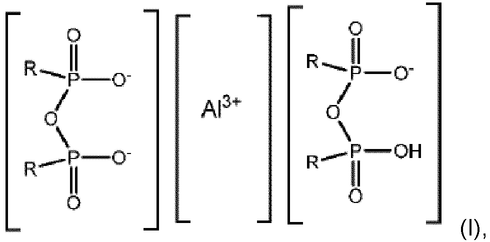 worin R für C₁-C₁₂-Alkyl steht, vorzugsweise für Methyl, Ethyl, Isopropyl oder isoButyl, tert.-Butyl oder n-Butyl, besonders bevorzugt für Ethyl oder Methyl, ganz besonders bevorzugt für Methyl,
C) 5 bis 120 Massenanteile, bevorzugt 7 bis 80 Massenanteile, besonders bevorzugt 8 bis 60 Massenanteile, insbesondere bevorzugt 10 bis 50 Massenanteile wenigstens eines organischen Phosphinsäuresalzes der Formel (II) und/oder wenigstens eines Diphosphinsäuresalzes der Formel (III) und/oder deren Polymere, 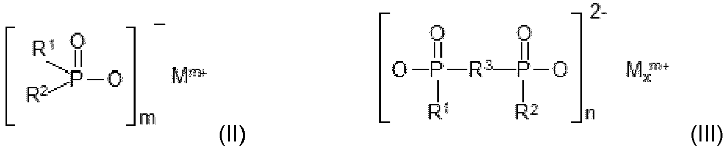 worin
R¹, R² gleich oder verschieden sind und für ein lineares oder verzweigtes C₁-C₆-Alkyl, und/oder für C₆-C₁₄-Aryl stehen,
R³ für lineares oder verzweigtes C₁-C₁₀-Alkylen, C₆-C₁₀-Arylen oder für C₁-C₆-Alkyl-C₆-C₁₀-arylen oder C₆-C₁₀-Aryl-C₁-C₆-alkylen steht,
M für Aluminium, Zink oder Titan steht,
m für eine ganze Zahl von 1 bis 4 steht;
n für eine ganze Zahl von 1 bis 3 steht,
x für 1 und 2 steht,
wobei n, x und m in Formel (III) gleichzeitig nur solche ganzen Zahlen annehmen können, dass das Diphosphinsäuresalz der Formel (III) als Ganzes ungeladen ist, und
D) 3 bis 300 Massenanteile, bevorzugt 5 bis 200 Massenanteile, besonders bevorzugt zu 10 bis 120 Massenanteile, insbesondere bevorzugt 15 bis 90 Massenanteile wenigstens eines Glas basierten Füll- und/oder Verstärkungsstoffs
mit der Maßgabe, dass Komponente B) in geringeren Massenanteilen als Komponente C) vorliegt.

2. Zusammensetzungen gemäß Anspruch 1, **dadurch gekennzeichnet, dass** als Komponente A) Polybutylenterephthalat, Polyethylenterephthalat oder Poly-1,4-cyclohexandimethanolterephthalat eingesetzt wird.

3. Zusammensetzungen gemäß Anspruch 1 oder 2, **dadurch gekennzeichnet, dass** als Komponente C) Aluminium-tris(diethylphosphinat) eingesetzt wird.

4. Zusammensetzungen gemäß einem oder mehreren der Ansprüche 1 bis 3, **dadurch gekennzeichnet, dass** als Komponente D) Glasfasern eingesetzt werden.

5. Zusammensetzungen gemäß einem oder mehreren der Ansprüche 1 bis 4, **dadurch gekennzeichnet, dass** als Komponente A) Polybutylenterephthalat, als Komponente B) Aluminiummethylphosphonat der Formel (la) 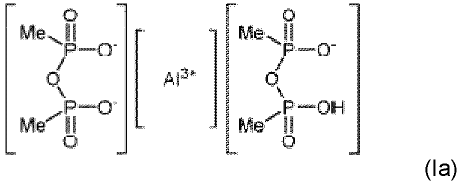 als Komponente C) Aluminium-tris(diethylphosphinat) und als Komponente D) Glasfasern eingesetzt werden.

6. Erzeugnisse, vorzugsweise Erzeugnisse für die Elektromobilität, für Haushaltsgeräte sowie im Elektronik- und Elektrobereich, basierend auf den Zusammensetzungen gemäß einem oder mehreren der Ansprüche 1 bis 5.

7. Verfahren zur Herstellung von Erzeugnissen, vorzugsweise Erzeugnissen für die Elektromobilität, für Haushaltsgeräte sowie im Elektronik- und Elektrobereich, indem man die
Komponente A) 100 Massenanteile Polyalkylenterephthalat oder Polycycloalkenterephthalat, mit
B) 1 bis 80 Massenanteilen, bevorzugt 2 bis 60 Massenanteilen, besonders bevorzugt 3 bis 30 Massenanteilen, insbesondere bevorzugt 5 bis 20 Massenanteilen wenigstens eines Aluminiumsalzes der allgemeinen Formel (I) 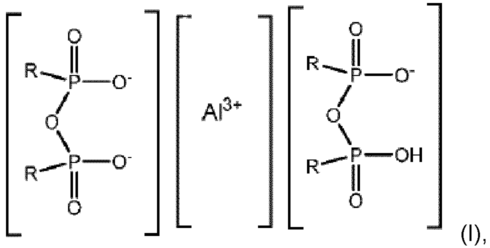
worin R für C₁-C₁₂-Alkyl steht, vorzugsweise für Methyl, Ethyl, Isopropyl oder isoButyl, tert.-Butyl oder n-Butyl, besonders bevorzugt für Ethyl oder Methyl, ganz besonders bevorzugt für Methyl,
C) 5 bis 120 Massenanteilen, bevorzugt 7 bis 80 Massenanteilen, besonders bevorzugt 8 bis 60 Massenanteilen, insbesondere bevorzugt 10 bis 50 Massenanteilen wenigstens eines organischen Phosphinsäuresalzes der Formel (II) und/oder wenigstens eines Diphosphinsäuresalzes der Formel (III) und/oder deren Polymere, 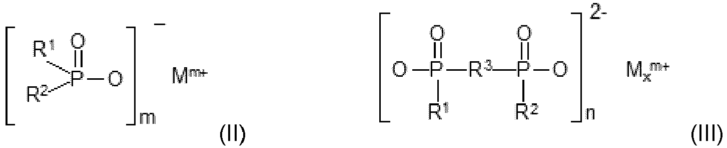
worin
R¹, R² gleich oder verschieden sind und für ein lineares oder verzweigtes C₁-C₆-Alkyl, und/oder für C₆-C₁₄-Aryl stehen,
R³ für lineares oder verzweigtes C₁-C₁₀-Alkylen, C₆-C₁₀-Arylen oder für C₁-C₆-Alkyl-C₆-C₁₀-arylen oder C₆-C₁₀-Aryl-C₁-C₆-alkylen steht,
M für Aluminium, Zink oder Titan steht,
m für eine ganze Zahl von 1 bis 4 steht;
n für eine ganze Zahl von 1 bis 3 steht,
x für 1 und 2 steht,
wobei n, x und m in Formel (III) gleichzeitig nur solche ganzen Zahlen annehmen können, dass das Diphosphinsäuresalz der Formel (III) als Ganzes ungeladen ist, und
D) 3 bis 300 Massenanteilen, bevorzugt 5 bis 200 Massenanteilen, besonders bevorzugt zu 10 bis 120 Massenanteilen, insbesondere bevorzugt 15 bis 90 Massenanteilen wenigstens eines Glas basierten Füll und/oder Verstärkungsstoffs
sowie gegebenenfalls mit weiteren Additiven in wenigstens einem Mischaggregat mischt oder vermengt und schließlich im Spritzguss verarbeitet mit der Maßgabe, dass Komponente B) in geringeren Massenanteilen als Komponente C) eingesetzt wird.

8. Verfahren gemäß Anspruch 7, **dadurch gekennzeichnet, dass** als Komponente A) Polybutylenterephthalat, Polyethylenterephthalat oder Poly-1,4-cyclohexandimethanolterephthalat eingesetzt werden.

9. Verfahren gemäß Anspruch 7 oder 8, **dadurch gekennzeichnet, dass** als Komponente C) Aluminium-tris(diethylphosphinat) eingesetzt wird.

10. Verfahren gemäß einem oder mehreren der Ansprüche 7 bis 9, **dadurch gekennzeichnet, dass** als Komponente D) Glasfasern eingesetzt werden.

11. Verfahren gemäß einem oder mehreren der Ansprüche 7 bis 10, **dadurch gekennzeichnet, dass** als Komponente A) Polybutylenterephthalat, als Komponente B) Aluminiummethylphosphonat der Formel (la) 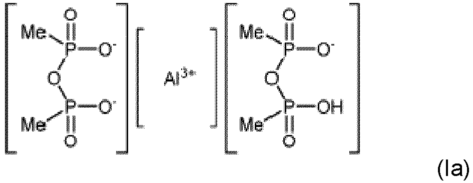 als Komponente C) Aluminium-tris(diethylphosphinat) und als Komponente D) Glasfasern eingesetzt werden.

12. Verwendung der Zusammensetzungen gemäß einem oder mehreren der Ansprüche 1 bis 5 zur Herstellung von Erzeugnissen, vorzugsweise von Erzeugnissen für die Elektromobilität, für Haushaltsgeräte sowie im Elektronik- und Elektrobereich.

## Claims

1. Compositions comprising
A) per 100 parts by mass of polyalkylene terephthalate or polycycloalkylene terephthalate,
B) 1 to 80 parts by mass, preferably 2 to 60 parts by mass, particularly preferably 3 to 30 parts by mass, especially preferably 5 to 20 parts by mass, of at least one aluminium salt of general formula (I) 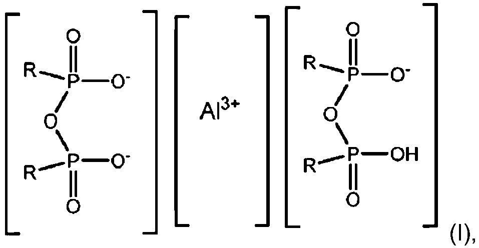 wherein R represents C₁-C₁₂-alkyl, preferably methyl, ethyl, isopropyl or isobutyl, tert-butyl or n-butyl, particularly preferably ethyl or methyl, very particularly preferably methyl,
C) 5 to 120 parts by mass, preferably 7 to 80 parts by mass, particularly preferably 8 to 60 parts by mass, especially preferably 10 to 50 parts by mass, of at least one organic phosphinic acid salt of formula (II) and/or at least one diphosphinic acid salt of formula (III) and/or of polymers thereof, 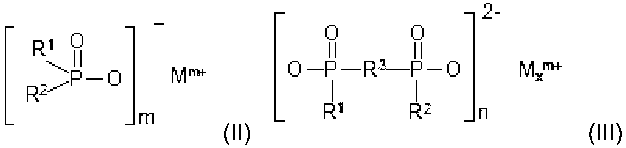 Wherein
R¹, R² are identical or different and represent a linear or branched C₁-C₆-alkyl and/or Co-C₁₄-aryl,
R³ represents linear or branched C₁-C₁₀-alkylene, C₆-C₁₀-arylene or C₁-C₆-alkyl-C₆-C₁₀-arylene or C₆-C₁₀-aryl-C₁-C₆-alkylene,
M represents aluminium, zinc or titanium,
m represents an integer from 1 to 4;
n represents an integer from 1 to 3,
x represents 1 and 2,
wherein n, x and m in formula (III) can simultaneously assume only integers such that the diphosphinic acid salt of formula (III) as a whole is uncharged, and
D) 3 to 300 parts by mass, preferably 5 to 200 parts by mass, particularly preferably 10 to 120 parts by mass, especially preferably 15 to 90 parts by mass, of at least one glass-based filler and/or reinforcer
with the proviso that component B) is present in lower mass fractions than component C).

2. Compositions according to Claim 1, **characterized in that** they employ polybutylene terephthalate, polyethylene terephthalate or poly-1,4-cyclohexanedimethanol terephthalate as component A).

3. Compositions according to Claim 1 or 2, **characterized in that** they employ aluminium tris(diethylphosphinate) as component C).

4. Compositions according to one or more of Claims 1 to 3, **characterized in that** they employ glass fibres as component D).

5. Compositions according to one or more of Claims 1 to 4, **characterized in that** they employ polybutylene terephthalate as component A), aluminium methylphosphonate of formula (la) 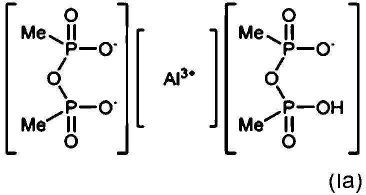 as component B), aluminium tris(diethylphosphinate) as component C) and glass fibres as component D).

6. Products, preferably products for electromobility, for household appliances and in the electronics and electricals sector, based on the compositions according to one or more of Claims 1 to 5.

7. Process for producing products, preferably products for electromobility, for household appliances and in the electronics and electricals sector, comprising mixing or blending
component A) 100 parts by mass of polyalkylene terephthalate or polycycloalkene terephthalate with
B) 1 to 80 parts by mass, preferably 2 to 60 parts by mass, particularly preferably 3 to 30 parts by mass, especially preferably 5 to 20 parts by mass, of at least one aluminium salt of general formula (I) 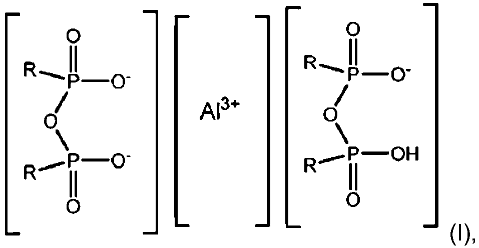
wherein R represents C₁-C₁₂-alkyl, preferably methyl, ethyl, isopropyl or isobutyl, tert-butyl or n-butyl, particularly preferably ethyl or methyl, very particularly preferably methyl,
C) 5 to 120 parts by mass, preferably 7 to 80 parts by mass, particularly preferably 8 to 60 parts by mass, especially preferably 10 to 50 parts by mass, of at least one organic phosphinic acid salt of formula (II) and/or at least one diphosphinic acid salt of formula (III) and/or of polymers thereof, 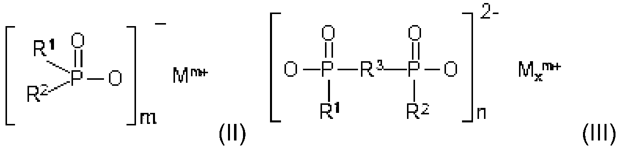 wherein
R¹, R² are identical or different and represent a linear or branched C₁-C₆-alkyl and/or C₆-C₁₄-aryl,
R³ represents linear or branched C₁-C₁₀-alkylene, C₆-C₁₀-arylene or C₁-C₆-alkyl-C₆-C₁₀-arylene or C₆-C₁₀-aryl-C₁-C₆-alkylene,
M represents aluminium, zinc or titanium,
m represents an integer from 1 to 4;
n represents an integer from 1 to 3,
x represents 1 and 2,
wherein n, x and m in formula (III) can simultaneously assume only integers such that the diphosphinic acid salt of formula (III) as a whole is uncharged, and
D) 3 to 300 parts by mass, preferably 5 to 200 parts by mass, particularly preferably 10 to 120 parts by mass, especially preferably 15 to 90 parts by mass, of at least one glass-based filler and/or reinforcer
and optionally with further additives in at least one mixing apparatus and finally processing the resulting mixture by injection moulding with the proviso that component B) is employed in lower mass fractions than component C).

8. Process according to Claim 7, **characterized in that** it employs polybutylene terephthalate, polyethylene terephthalate or poly-1,4-cyclohexanedimethanol terephthalate as component A).

9. Process according to Claim 7 or 8, **characterized in that** it employs aluminium tris(diethylphosphinate) as component C).

10. Process according to one or more of Claims 7 to 9, **characterized in that** it employs glass fibres as component D).

11. Process according to one or more of Claims 7 to 10, **characterized in that** it employs polybutylene terephthalate as component A), aluminium methylphosphonate of formula (la) 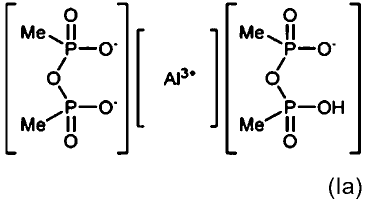 as component B), aluminium tris(diethylphosphinate) as component C) and glass fibres as component D).

12. Use of the compositions according to one or more of Claims 1 to 5 for producing products, preferably products for electromobility, for household appliances and in the electronics and electricals sector.

## Revendications

1. Compositions comprenant
A) pour 100 parties en masse de poly(téréphtalate d'alkylène) ou de poly(téréphtalate de cycloalkylène),
B) 1 à 80 parties en masse, de préférence 2 à 60 parties en masse, de manière particulièrement préférée 3 à 30 parties en masse, en particulier de préférence 5 à 20 parties en masse, d'au moins un sel d'aluminium de formule générale (I) 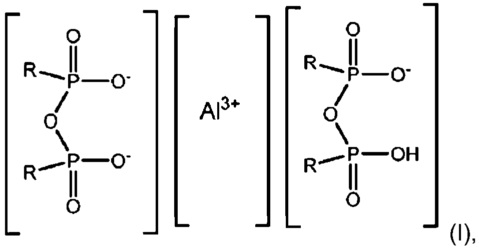 dans laquelle R représente C₁-C₁₂-alkyle, de préférence méthyle, éthyle, isopropyle ou isobutyle, tert-butyle ou n-butyle, de manière particulièrement préférée éthyle ou méthyle, de manière tout particulièrement préférée méthyle,
C) 5 à 120 parties en masse, de préférence 7 à 80 parties en masse, de manière particulièrement préférée 8 à 60 parties en masse, en particulier de préférence 10 à 50 parties en masse, d'au moins un sel organique d'acide phosphinique de formule (II) et/ou d'au moins un sel d'acide diphosphinique de formule (III) et/ou de leurs polymères, 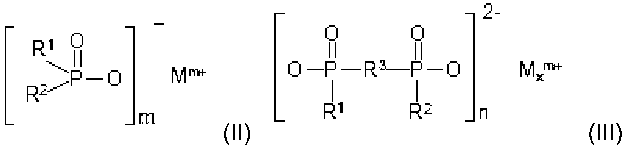 dans lesquelles
R¹, R² sont identiques ou différents et représentent C₁-C₆-alkyle linéaire ou ramifié et/ou C₃-C₁₄-aryle,
R³ représente C₁-C₁₀-alkylène linéaire ou ramifié, C₆-C₁₀-arylène ou C₁-C₆ alkyl-C₆-C₁₀-arylène ou C₆-C₁₀-aryl-C₁-C₆-alkylène,
M représente aluminium, zinc ou titane,
m représente un nombre entier de 1 à 4;
n représente un nombre entier de 1 à 3,
x représente 1 et 2,
n, x et m dans la formule (III) ne pouvant représenter simultanément que des nombres entiers tels que le sel d'acide diphosphinique de formule (III) dans son ensemble n'est pas chargé et
D) 3 à 300 parties en masse, de préférence 5 à 200 parties en masse, de manière particulièrement préférée 10 à 120 parties en masse, en particulier de préférence 15 à 90 parties en masse, d'au moins une charge et/ou substance de renforcement à base de verre
sous réserve que le composant B) soit présent dans des parties en masse inférieures à celles du composant C).

2. Compositions selon la revendication 1, **caractérisées en ce que** l'on utilise, comme composant A), du poly(téréphtalate de butylène), du poly(téréphtalate d'éthylène) ou du poly(téréphtalate de 1,4-cyclohexanediméthanol).

3. Compositions selon la revendication 1 ou 2, **caractérisées en ce que** l'on utilise, comme composant C), du tris(diéthylphosphinate) d'aluminium.

4. Compositions selon l'une ou plusieurs des revendications 1 à 3, **caractérisées en ce que** l'on utilise, comme composant D), des fibres de verre.

5. Compositions selon l'une ou plusieurs des revendications 1 à 4, **caractérisées en ce que** l'on utilise, comme composant A), du poly(téréphtalate de butylène), comme composant B), du méthylphosphonate d'aluminium de formule (la) 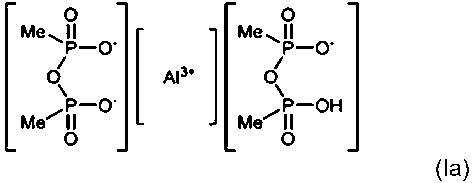 comme composant C) du tris(diéthylphosphinate) d'aluminium et, composant D), des fibres de verre.

6. Produits, de préférence produits pour la mobilité électrique, pour des appareils ménagers ainsi que dans le domaine électronique et électrique, à base de compositions selon l'une ou plusieurs des revendications 1 à 5.

7. Procédé de fabrication de produits, de préférence de produits pour la mobilité électrique, pour des appareils ménagers ainsi que dans le domaine électronique et électrique, dans lequel on mélange ou on combine
le composant A) 100 parties en masse de poly(téréphtalate d'alkylène) ou de poly(téréphtalate de cycloalcène) avec
B) 1 à 80 parties en masse, de préférence 2 à 60 parties en masse, de manière particulièrement préférée 3 à 30 parties en masse, en particulier de préférence 5 à 20 parties en masse, d'au moins un sel d'aluminium de formule générale (I) 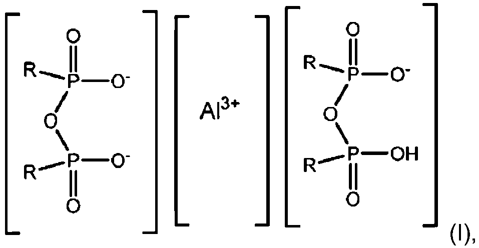
dans laquelle R représente C₁-C₁₂-alkyle, de préférence méthyle, éthyle, isopropyle ou isobutyle, tert-butyle ou n-butyle, de manière particulièrement préférée éthyle ou méthyle, de manière tout particulièrement préférée méthyle,
C) 5 à 120 parties en masse, de préférence 7 à 80 parties en masse, de manière particulièrement préférée 8 à 60 parties en masse, en particulier de préférence 10 à 50 parties en masse, d'au moins un sel organique d'acide phosphinique de formule (II) et/ou d'au moins un sel d'acide diphosphinique de formule (III) et/ou de leurs polymères, 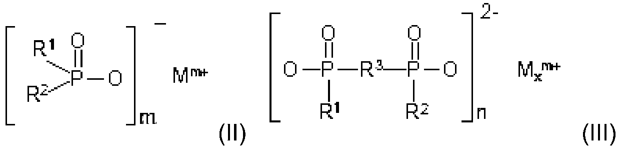
dans lesquelles
R¹, R² sont identiques ou différents et représentent C₁-C₆-alkyle linéaire ou ramifié et/ou C₆-C₁₄-aryle,
R³ représente C₁-C₁₀-alkylène linéaire ou ramifié, C₆-C₁₀-arylène ou C₁-C₆-alkyl-C₆-C₁₀-arylène ou C₆-C₁₀-aryl-C₁-C₆-alkylène,
M représente aluminium, zinc ou titane,
m représente un nombre entier de 1 à 4;
n représente un nombre entier de 1 à 3,
x représente 1 et 2,
n, x et m dans la formule (III) ne pouvant représenter simultanément que des nombres entiers tels que le sel d'acide diphosphinique de formule (III) dans son ensemble n'est pas chargé et
D) 3 à 300 parties en masse, de préférence 5 à 200 parties en masse, de manière particulièrement préférée 10 à 120 parties en masse, en particulier de préférence 15 à 90 parties en masse, d'au moins une charge et/ou substance de renforcement à base de verre
ainsi que le cas échéant avec d'autres additifs dans au moins un appareil de mélange et enfin on traite par moulage par injection, sous réserve que le composant B) soit utilisé dans des parties en masse inférieures à celles du composant C).

8. Procédé selon la revendication 7, **caractérisé en ce que** l'on utilise comme, composant A), du poly(téréphtalate de butylène), du poly(téréphtalate d'éthylène) ou du poly(téréphtalate de 1,4-cyclohexanediméthanol).

9. Procédé selon la revendication 7 ou 8, **caractérisé en ce que** l'on utilise, comme composant C), du tris(diéthylphosphinate) d'aluminium.

10. Procédé selon l'une ou plusieurs des revendications 7 à 9, **caractérisé en ce que** l'on utilise, comme composant D), des fibres de verre.

11. Procédé selon l'une ou plusieurs des revendications 7 à 10, **caractérisé en ce que** l'on utilise, comme composant A), du poly(téréphtalate de butylène), comme composant B), du méthylphosphonate d'aluminium de formule (la) 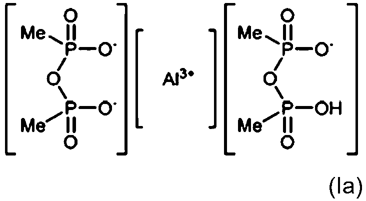 comme composant C) du tris(diéthylphosphinate) d'aluminium et, composant D), des fibres de verre.

12. Utilisation des compositions selon l'une ou plusieurs des revendications 1 à 5 pour la fabrication de produits, de préférence de produits pour la mobilité électrique, pour des appareils ménagers et dans le domaine de l'électronique et de l'électricité.
